(19) Europäisches Patentamt
European Patent Office
Office européen des brevets

(11) **EP 3 790 850 B1**

(12) **EUROPEAN PATENT SPECIFICATION**

(45) Date of publication and mention
of the grant of the patent:
**13.03.2024 Bulletin 2024/11**

(51) International Patent Classification (IPC):
**C04B 35/185** (2006.01)    **C04B 35/622** (2006.01)
**D04H 1/4209** (2012.01)    **D04H 3/002** (2012.01)
**F01N 3/28** (2006.01)

(21) Application number: **19727787.4**

(22) Date of filing: **10.05.2019**

(52) Cooperative Patent Classification (CPC):
**D04H 1/4209; C04B 35/185; C04B 35/62245;
D04H 3/002; F01N 3/2853**

(86) International application number:
**PCT/US2019/031653**

(87) International publication number:
**WO 2019/217776 (14.11.2019 Gazette 2019/46)**

(54) **NONWOVEN ARTICLE OF DISCONTINUOUS POLYCRYSTALLINE, ALUMINOSILICATE CERAMIC FIBERS, AND METHOD OF MAKING AND USING THE SAME**

VLIESSTOFF AUS DISKONTINUIERLICHEN POLYKRISTALLINEN ALUMINOSILIKAT-KERAMIK-FASERN SOWIE VERFAHREN ZUR HERSTELLUNG UND VERWENDUNG DAVON

ARTICLE NON-TISSÉ À BASE DE FIBRES CÉRAMIQUES DISCONTINUES D'ALUMINOSILICATE POLYCRISTALLIN, ET LEUR PROCÉDÉ DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2018 US 201862670011 P**

(43) Date of publication of application:
**17.03.2021 Bulletin 2021/11**

(73) Proprietor: **3M Innovative Properties Company**
**Saint Paul, Minnesota 55133-3427 (US)**

(72) Inventors:
• **DE ROVERE, Anne N.**
**Saint Paul, Minnesota 55133-3427 (US)**
• **BERRIGAN, Michael R.**
**Saint Paul, Minnesota 55133-3427 (US)**

• **CHIU, William V.**
**Saint Paul, Minnesota 55133-3427 (US)**
• **HELLER, Daimon K**
**Saint Paul, Minnesota 55133-3427 (US)**
• **MCGEE, Kari A.**
**Saint Paul, Minnesota 55133-3427 (US)**
• **WILSON, David M.**
**Saint Paul, Minnesota 55133-3427 (US)**

(74) Representative: **Mathys & Squire**
**Theatinerstraße 7**
**80333 München (DE)**

(56) References cited:
**EP-A1- 2 754 747**    **EP-A1- 2 949 791**
**WO-A1-2012/106295**    **WO-A1-2018/093624**
**US-A- 3 760 049**

## Description

### FIELD

The present disclosure relates to methods of making polycrystalline, aluminosilicate ceramic continuous filaments and discontinuous fibers, unfired (i.e., green) and fired nonwoven webs made with such ceramic filaments and fibers, and unfired (i.e., green) and fired two-dimensional and three-dimensional nonwoven structures (e.g., nonwoven ceramic fiber sheets and mats) made from such unfired (i.e., green) and fired nonwoven webs. More particularly, the disclosure relates to polycrystalline, aluminosilicate ceramic filaments, fibers, and nonwoven ceramic two-dimensional and three-dimensional fibrous structure useful for various commercial (e.g., automotive, aerospace, industrial, etc.) application (e.g., insulating and protecting batteries for electric vehicles, mounting and insulating applications in pollution control devices and other exhaust system components for internal combustion engines, etc.).

### BACKGROUND

There are a number of commercial applications that require the use of fibrous material with high temperature resistance, high temperature insulating performance, high corrosion resistance, etc. For example, pollution control devices are employed on motor vehicles to control atmospheric pollution. Two types of such devices, catalytic converters and diesel particulate filters or traps, are currently in widespread use. Catalytic converters contain a catalyst, which is typically coated onto a monolithic structure mounted in the converter. The monolithic structures are typically ceramic, although metal monoliths have been used. The catalyst oxidizes carbon monoxide and hydrocarbons, and reduces the oxides of nitrogen in automobile exhaust gases to control atmospheric pollution. Diesel particulate filters or traps are generally wall flow filters which have honeycombed monolithic structures typically made from porous crystalline ceramic material. Typically, as constructed, each type of these devices has a metal housing which holds within it a monolithic structure or element that can be metal or ceramic, and is most commonly ceramic. The ceramic monolith generally has very thin walls to provide a large amount of surface area and is fragile and susceptible to breakage. It also has a coefficient of thermal expansion generally an order of magnitude less than the metal (usually stainless steel) housing in which it is contained.

To avoid damage to the ceramic monolith from road shock and vibration, to compensate for the thermal expansion difference, and to prevent exhaust gases from passing between the monolith and the metal housing, ceramic mat or intumescent sheet materials are often disposed between the ceramic monolith and the metal housing. The process of placing or inserting the ceramic monolith and mounting material within the metal housing is also referred to as canning and includes such processes as wrapping an intumescent sheet or ceramic mat around the monolith and inserting the wrapped monolith into the housing.

For catalytic converters to function properly, they must reach their light-off temperature. Until they do, emissions of pollutants may occur. To reduce the time required for the light-off temperature to be reached, the heat of exhaust gases going from the engine to the emission control devices should be kept inside the exhaust system assembly. This would reduce the amount of time that exhaust pollutants pass through the exhaust system without being catalyzed, and in turn would reduce the amount of pollutants released to the atmosphere.

It is known to insulate automotive engine exhaust pipes and catalytic mufflers using a ceramic insulation blanket or mat mounted outside of the exhaust pipe or muffler. The insulation material is typically a covered by a heat shield or placed in a tube-in-a-tube assembly to protect the outside of the insulation mat.

WO 2018/093624 A1 relates to nonwoven webs including a multiplicity of non-respirable, polycrystalline, aluminosilicate ceramic filaments entangled to form a cohesive mat, the polycrystalline, aluminosilicate ceramic filaments having an average mullite percent of at least 75 wt. %.

WO 2012/106295 A1 relates to a mounting member for wrapping and mounting a pollution control element in a casing, and provides a mat made from inorganic fiber material, and an aggregated substance containing an organic binder and inorganic fine particles that is impregnated throughout most of the mat.

EP 2754747 A1 relates to an inorganic fiber molded body that is excellent in scale resistance, thermal shock resistance and mechanical shock resistance, and prevented from suffering from shrinkage when used under high-temperature heating conditions. The inorganic fiber molded body is produced by impregnating a needle blanket of inorganic fibers with a liquid material of a precursor of a spinel-based compound; drying the thus impregnated needle blanket; and firing the dried needle blanket to convert the precursor into an oxide thereof.

### SUMMARY

The invention is defined in the appended set of claims 1-14. Processes for producing nonwoven webs are generally characterized as continuous filament spinning processes or discontinuous fiber blowing processes. Filament spinning processes yield continuous or substantially continuous filaments, typically in the form of rovings, which generally require further processing to be converted into a nonwoven mat comprising discontinuous fibers produced by segmenting the continuous and substantially continuous filaments (e.g., by chopping). The continuous filaments in the rovings are typically chopped into shorter fiber strands that can be opened into individual fibers before being laid down (e.g., by wet-laying or air-laying) into a uniform mat, and subsequently consolidated by mechanical or chemical means. This process usually results in a somewhat uniform fiber diameter distribution, but is not a commercially viable solution for the production of polycrystalline fiber mats due to the high cost, large number of process steps, and production rate limitations inherent to the process.

Discontinuous ceramic fibers also may be produced using a fiber blowing process. In fiber blowing processes, an initially low viscosity ceramic precursor dispersion or sol is pumped through a nozzle before it is stretch and fibrillated using high speed air flow streams to form discrete fibers, which are subsequently collected to form a nonwoven green (unfired) fiber mat, which is subsequently fired at elevated temperature to form a nonwoven ceramic filament mat. The combination of low viscosity and high flow rate at the fiber-forming step typically leads to broad fiber diameter distribution and wide variation in fiber diameter variability, which does not permit precise control of the fiber diameter for the commercial production of non-respirable, polycrystalline, ceramic filaments or fibers, or articles including such filaments or fibers.

Polycrystalline alumina, silica, and aluminosilicate fibers can withstand high operating temperatures, and several commercially-available products using that type of fiber in a nonwoven ceramic mat have been used in the automotive industry. Most of these mats are made using discrete (i.e., discontinuous) ceramic fibers, such as for example, Saffil LDM alumina fibers available from Unifrax (Tonawanda, NY), or MLS2 and MLS3 alumina/silica fibers available from Mitsubishi Plastic, Inc. (Tokyo, Japan). Fibers having diameters less than 3 micrometers can be found in all of these commercially-available discrete ceramic fibers and products made with them, which makes the fibers potentially respirable (e.g., breathable).

Manufactured ceramic fiber products are generally known to release airborne respirable fibers during their production and use. The upper-diameter limit for respirable fibers is generally considered to be 3 micrometers ($\mu$m). In three refractory ceramic fiber manufacturing facilities, about 90% of airborne fibers were determined to be respirable (i.e., < 3 $\mu$m in diameter), and about 95% were less than 50 $\mu$m long (*see, e.g.,* NIOSH 2006, Criteria for a Recommended Standard: Occupational Exposure to Refractory Ceramic Fibers. National Institute for Occupational Safety and Health; http://www.cdc.gov/niosh/docs/2006-123).

Although some of these health concerns with respect to respirable aluminosilicate fibers may be mitigated by the addition of organic and inorganic binders to the nonwoven discrete aluminosilicate ceramic filaments and fiber mats formed therefrom (hence limiting the risk for the fibers to become airborne), there is a need for high performance, non-respirable, polycrystalline, aluminosilicate ceramic filaments and nonwoven webs and mats produced therefrom, that meet the requirements for non-respirable fibers (i.e., length/diameter (L/D) > 3:1, with a fiber diameter greater than 3 micrometers).

Briefly, in one aspect, the present disclosure describes a nonwoven web including a multiplicity of polycrystalline, aluminosilicate ceramic filaments to form a nonwoven web. It can be desirable for the filaments to be entangled and the nonwoven web to be cohesive. The aluminosilicate ceramic filaments may have an average mullite percent of less than 75 wt.%, 70 wt. %, 65 wt. %, 60 wt. %, 55 wt. %, 50 wt. %, 45 wt. %, 40 wt. %, 35 wt. %, 30 wt. %, or 25 wt. %; at least 20 wt. %, 25 wt. %, 30 wt. %, 35 wt. %, 40 wt. %, 45 wt. %, 50 wt. %, 55 wt. %, 60 wt. %, 65 wt. %, 70 wt. %, 75 wt. %; or an average mullite percent anywhere in between any of these upper and lower limits. A nonwoven web to exhibits a compression resilience of at least 30 kPa, 35 kPa, 40 kPa, 45 kPa, 50 kPa, 55 kPa, 60 kPa, or higher after 1,000 cycles at 900°C when measured according to the Fatigue Test using the open gap setting.

As used herein, any disclosure described for a mat, a sheet or a blanket can be applied equally to any nonwoven fibrous structure of discontinuous fibers that is predominately a two-dimensional nonwoven fibrous structure having a major surface dimension that is at least 10, 15, 20, 25, 30, 35, 40, 45, 50, 55, 60, 65, 70, 75, 80, 85, 90, 95, 100, 125, 150, 175, or 200 times larger, or more, than its thickness dimension. As used herein, the term "two-dimensional nonwoven structure" will be used to refer to such a predominately two-dimensional nonwoven fibrous structure. Therefore, a two-dimensional nonwoven structure would include, for example, a hollow cone-shaped or tubular shaped or box-shaped structure that is generally or overall three-dimensional. It can be desirable for the filaments of the nonwoven fibrous web, as well as the fibers of the two-dimensional nonwoven structure, to be non-respirable.

In an additional aspect, the present disclosure describes a nonwoven fibrous web comprising a plurality, mostly (i.e., greater than 50%, 55%, 60%, 65%, 70%, 75%, 80%, 85%, 90%, 95% or more) by weight, or all, of filaments that are polycrystalline, aluminosilicate ceramic, continuous or substantially continuous, green or fired filaments. This web can be processed into a single-layer or multilayered two-dimensional nonwoven structure of discontinuous fibers, where at least one, a plurality, most (i.e., greater than 50%, 55%, 60%, 65%, 70%, 75%, 80%, 85%, 90%, 95% or more) by weight, or all, of the fibers are green or fired and have a length equal to the longest or shortest major surface dimension of the two-dimensional nonwoven structure (e.g., the length or width of a mat, sheet or blanket, the circumference of a tube, etc.) or a length in between those dimensions. The nonwoven web of the fired continuous or substantially continuous filaments can exhibit a compression resiliency of at least 50 kPa, 55 kPa, 60 kPa, 65 kPa, 70 kPa, 75 kPa, 80 kPa, or higher after 1,000 cycles at 900°C, when measured according to the Fatigue Test using the open gap setting. The filaments may not be entangled and the nonwoven web may not be cohesive. It can be desirable for the filaments to be entangled and the nonwoven web to be cohesive.

A two-dimensional nonwoven structure of such discontinuous fibers that have been fired can be made from the above nonwoven fibrous web of fired filaments. If the two-dimensional nonwoven structure is made from the nonwoven fibrous web of green filaments, the two-dimensional nonwoven structure will need to be fired. Either way, the resulting two-dimensional nonwoven structure of fired discontinuous fibers can also exhibit a compression resiliency of at least 50 kPa after 1,000 cycles at 900°C when measured according to the Fatigue Test using the open gap setting. These test results may be obtainable with little or without any needling of the nonwoven web or the two-dimensional nonwoven structure. These test results may also be obtainable the nonwoven web comprising only the filaments or the two-dimensional nonwoven structure comprising only the fibers.

Two-dimensional nonwoven structures having a longest major surface dimension and a shortest major surface dimension, said two-dimensional nonwoven structure comprising a plurality of discontinuous polycrystalline, aluminosilicate ceramic fibers having a length equal to the longest or shortest major surface dimension of the two-dimensional nonwoven structure or a length in between those dimensions.

These nonwoven fibrous structures have very little fibers oriented in the z-direction (parallel to the thickness of the structure). Such structures have been found to exhibit very high compression levels. No needling, only generally horizontally layered filaments or fibers.

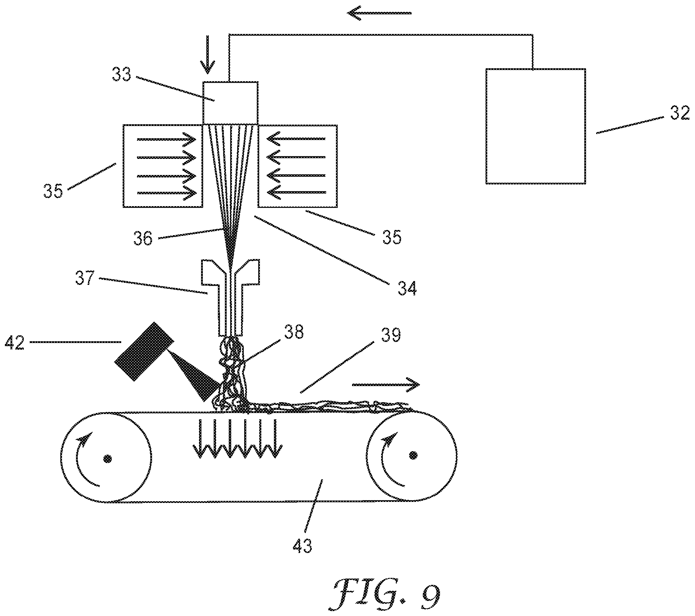

The nonwoven green fiber web or structure can be prepared by delivering an inorganic sol gel solution through a spinneret assembly with multiple orifices, to form a stream of filaments, drying and drawing them as they move down, and then intercepting the stream of filaments on a porous collector. The filaments deposit on the collector as a mass of substantially continuous fibers (bulk or mat) take the form of a continuous web that is not particularly handleable. This continuous web can be made easier to handle by being further processed. For example, such post-processes may include but are not limited to stitching the continuous web and/or encasing the continuous web in a thin sheath. This thin sheath may be a continuous film or highly porous (e.g., in the form of netting). When the thin sheath is made with polymeric or other organic material, it can be preferable to use the sheath in the form of netting to reduce the amount of organic material that will burn-off during the use of the mat (i.e., in the pollution control device). It may also be desirable for such an organic sheath to have an exposed surface that is frictionless or that exhibits a relatively low coefficient of friction (i.e., lower than the coefficient of friction of the fiber mat surface itself) so as to facilitate the assembly (canning) of the mat and pollution control element in the housing of the pollution control device. Such a low friction organic sheath would then burn off during the nonwoven structure's use and thereby expose the higher friction fiber surface. Figure 9 describes a filament spinning and nonwoven web or structure making method that can be used in this invention.

In another aspect, the present disclosure describes a nonwoven fibrous web comprising a plurality, mostly (i.e., greater than 50%, 55%, 60%, 65%, 70%, 75%, 80%, 85%, 90%, 95% or more) by weight, or all, of filaments that are polycrystalline, aluminosilicate ceramic, continuous or substantially continuous, and fired, where a plurality, most (i.e., greater than 50%, 55%, 60%, 65%, 70%, 75%, 80%, 85%, 90%, 95% or more) by weight, or all, of the fired filaments are cohesively bonded together by a fired precursor inorganic binder (e.g., siloxane). Each cohesively bonded filament is bonded to one or a plurality of other filaments at one or a plurality of locations along its length. In this way, this nonwoven web can be characterized as being cohesively bonded (i.e., a nonwoven cohesively bonded web). Similarly, a two-dimensional nonwoven fibrous structure can comprise a plurality, mostly (i.e., greater than 50%, 55%, 60%, 65%, 70%, 75%, 80%, 85%, 90%, 95% or more) by weight, or all, of discontinuous fibers that are polycrystalline, aluminosilicate ceramic, and fired, where a plurality, most (i.e., greater than 50%, 55%, 60%, 65%, 70%, 75%, 80%, 85%, 90%, 95% or more) by weight, or all, of the fired fibers are cohesively bonded together by a fired precursor inorganic binder (e.g., siloxane). Each cohesively bonded discontinuous fiber is bonded to one or a plurality of other fibers at one or more locations along its length. In this way, this two-dimensional nonwoven structure can be characterized as being cohesively bonded (i.e., a cohesively bonded two-dimensional nonwoven structure). This cohesively bonded two-dimensional nonwoven structure can be formed (e.g., cut, molded, shaped, etc.) from a nonwoven cohesively bonded web of fired filaments. Alternatively, the cohesively bonded two-dimensional nonwoven structure can be formed (e.g., cut, molded, shaped, etc.) from a nonwoven web of unfired or green filaments, and then the resulting green structure is fired. Thus, the precursor inorganic binder (e.g., siloxane) can be applied to the nonwoven web, before or after its filaments are fired. Alternatively, the precursor inorganic binder (e.g., siloxane) can also be applied to the two-dimensional nonwoven structure, formed with fired or green fibers, followed by the precursor coated two-dimensional nonwoven structure being fired.

The precursor inorganic binder (e.g., siloxane) is applied so as to penetrate most (i.e., greater than 25%, 30%, 35%, 40%, 45%, 50%, 55%, 60%, 65%, 70%, 75%, 80%, 85%, 90%, 95% or more) by volume, or all (e.g., by immersing the nonwoven web or two-dimensional nonwoven structure in a bath of the precursor inorganic binder, by spraying the precursor inorganic binder onto the web or structure, etc.). The fibers of the two-dimensional nonwoven structure can have a length that is less than or equal to the longest or shortest major surface dimension of the two-dimensional nonwoven structure. It can be desirable for the fibers of the two-dimensional nonwoven structure to have a length less than the longest or shortest major surface dimension of the two-dimensional nonwoven structure. It can also be desirable for the fibers of the two-dimensional nonwoven structure to have a length that is greater than the thickness dimension of the two-dimensional nonwoven structure.

Ceramic nonwoven mats are commercially available, and are typically made of relatively short fibers using wet-laid and dry-laid processes, or are mechanically entangled into needled blankets. Needled blankets are available in 100% percent ceramic forms or shapes as their integrity is based on interlocking the ceramic fibers together, but can only be produced in flat two-dimensional shapes. Wet-laid ceramic fiber mats can be produced in three-dimensional shapes (e.g., a hollow truncated cone-shape) starting from a slurry made of water, ceramic fibers, and potential fillers, organic binder and/or inorganic binder. The use of organic binder (e.g., as a liquid, melty fiber, etc.) is necessary to ensure the integrity, flexibility and usefulness of the final three-dimensional structure. Three-dimensional structures could be achieved with ceramic fiber using a dry-laid process but would require the use of organic binder to hold the three-dimensional structure together.

For another aspect, the present disclosure describes three-dimensional nonwoven structures made with a plurality, most, or all, of discontinuous polycrystalline, aluminosilicate ceramic fibers, where the three-dimensional nonwoven structures are self-supportive without the need for any organic binder content. The composition of and process for making such three-dimensional nonwoven structures are described herein.

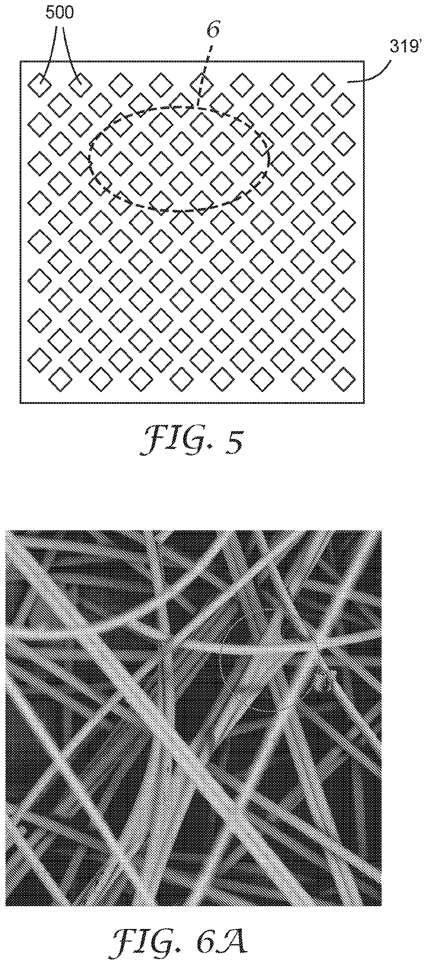

The three-dimensional nonwoven structures (e.g., mats, sheets or blankets) can be made from unfired or green discontinuous polycrystalline, aluminosilicate ceramic fibers that are shaped in the cavity of a three-dimensional mold (e.g., see the mold of FIG. 5) using a dry-laid process, before being fired. The three-dimensional nonwoven structure comprises at least one or a plurality of three-dimensional molded features, with each three-dimensional molded feature having a shortest major surface dimension. It can be desirable for each these three-dimensional molded features to be formed with discontinuous fibers having a length that is less than or equal to the shortest major surface dimension of the three-dimensional molded feature.

Before and possibly during initial stages of the firing process, before the green fibers are sufficiently strengthened by the firing step, the three-dimensional shape of the green fiber nonwoven structure can be held together by the use of organic binders. It can be desirable for a precursor inorganic binder, or other inorganic binder, to be applied to the green discontinuous fibers, before or after the green discontinuous fibers are formed into the desired three-dimensional shape. Such precursor inorganic binder, and/or other inorganic binder can help to maintain the three-dimensional shape of the nonwoven fiber structure during later stages of the firing process, when the organic binder is effectively burned off, and after the firing process is complete and the three-dimensional nonwoven structure has cooled.

Unfired or green fibers are soluble in water until they are exposed to elevated temperature, such as 600 or 800°C or higher temperatures. Organic and inorganic binders applied to the green precursor fibers or green precursor nonwoven fiber structures should not be water based as they will dissolve the fibers. Therefore, wet-laid processes should not be used with such green fibers for the same reasons.

Several advantages and uses can come from this three-dimensional nonwoven structure. For example, air pockets or cavities created within such structures, during the manufacturing process, can improve thermal or acoustic insulation performance. Such pockets or cavities can also cause an improvement in the flexibility of the nonwoven structure. In addition, the absence of an organic content (i.e., 100% inorganic material composition) can result in the final fired three-dimensional nonwoven structures being desirable for high temperature environments (i.e., temperatures that would degrade or burn the organic material), corrosive environments (i.e., that could degrade the organic material), or both. Fillers could be used to partially or completely fill the space within such pockets or cavities. With this invention, three-dimensional nonwoven structures can be made with shapes or patterns that help to reduce the amount of material used (e.g., the bulk density), which in turn can reduce the weight of the nonwoven structure, and lead to cost savings or ease of installation or both.

In another aspect, the present disclosure describes an article including the nonwoven web having a multiplicity of non-respirable, polycrystalline, aluminosilicate ceramic filaments, the article selected from a filtration article, a thermal insulation article, an acoustic insulation article, a fire protection article, a mounting mat article, a gasket article, a catalyst support article, and combinations thereof. In certain exemplary embodiments, the article is incorporated in a pollution control device, which preferably is selected from a catalytic converter, a muffler, and combinations thereof. The pollution control device may be installed in a motor vehicle exhaust system of a motor vehicle selected from an automobile, a motorcycle, a truck, a boat, a submersible, or an aircraft. Other applications could benefit from the high temperature, high insulating performance and high corrosion resistance of such nonwoven webs, two-dimensional nonwoven structures (e.g., sheets, mats and blankets, etc.), such as articles used as a thermal and/or fire barrier. In such an application, for example, the article could be used to prevent thermal runaway events in or around electric and other vehicle (e.g., automobiles, aircraft, watercraft, spacecraft, etc.) batteries and battery modules (e.g., all around and/or between the modules), aerospace applications, abrasives, filtration, etc.

In a further aspect, the present disclosure describes a method of making a nonwoven web including flowing an aqueous ceramic precursor sol through at least one orifice to produce at least one substantially continuous or continuous filament, wherein the aqueous ceramic precursor sol comprises at least one of alumina particles or silica particles dispersed in water, and further wherein the aqueous ceramic precursor sol further comprises at least one of a hydrolysable aluminum-containing compound or a hydrolyazable silicon-containing compound; removing at least a portion of the water from the at least one substantially continuous or continuous filament to at least partially dry the at least one substantially continuous or continuous filament; passing the at least partially dried filament through an attenuator to draw the filaments to a diameter; and collecting the at least partially dried filaments as a nonwoven web on a collector surface.

Various unexpected results and advantages may be obtained in various exemplary embodiments of the disclosure. One such advantage of exemplary embodiments of the present disclosure is that the polycrystalline, aluminosilicate ceramic filaments, webs, mats and articles made using the same are not respirable, and thus do not pose a risk of occupational health exposure. Another advantage is that the polycrystalline, aluminosilicate ceramic filaments have good thermal conductivity characteristics. Still another advantage is that the polycrystalline, aluminosilicate ceramic filaments include a high proportion of mullite, thereby leading to improved filament durability and resistance to breakage. A high mullite (i.e., at least 50 wt. %, 55 wt. %, 60 wt. %, 65 wt. %, 70 wt. %, 75 wt. %, 80 wt. %, 85 wt. %, or even 90 wt. % or more) is also believed to improve the thermomechanical properties (e.g., resistance to thermal creep at elevated temperatures) of the ceramic filaments.

Yet another advantage in certain exemplary embodiments is that the nonwoven webs or mats have outstanding compression resilience, even after 1,000 cycles at 900°C, when measured according to the Fatigue Test described herein. Such exemplary nonwoven fibrous webs or mats thus retain their shape and thermal and/or acoustic insulation characteristics under the compression stresses encountered when used in motor vehicle insulation applications and mounting applications (e.g., mounting pollution control elements). These and other unexpected results and advantages are within the scope of the following illustrative Exemplary Embodiments and Examples.

Various aspects and advantages of exemplary embodiments of the disclosure have been summarized. The above Summary is not intended to describe each illustrated embodiment or every implementation of the present certain exemplary embodiments of the present disclosure. The Drawings and the Detailed Description that follow more particularly exemplify certain preferred embodiments using the principles disclosed herein.

## BRIEF DESCRIPTION OF THE DRAWINGS

The present disclosure may be more completely understood in consideration of the following detailed description of various embodiments of the disclosure in connection with the accompanying figures, in which:

Fig. 1 is a cross sectional view of a mounting mat reinforced in accordance with one embodiment of the present disclosure;

Fig. 2 is a perspective view of an opened pollution control device comprising a reinforced mounting mat, according to embodiments of the present disclosure, with portions of the mat removed so as to more clearly see the aluminosilicate ceramic filaments;

Fig. 3 is an expanded perspective view of a preferred embodiment of a catalytic converter according to the present invention, as shown in U.S. Patent No. 7,261,864;

FIG. 4A shows a schematic side view of a dry-laid or air-laid forming box, as shown in U.S. Patent No. 9,834,875;

FIG. 4B shows a schematic side view of a Rigor dry-laid process/equipment, as shown in Fig. 3 of U.S. Patent No. 9,771,675;

FIG. 5 shows a top view of a perforated patterned collector surface useful in forming patterned air-laid nonwoven mats with square cut-out shapes/cavities, as shown in U.S. Patent No. 9,771,675;

FIGS. 6A-6E show Scanning Electron Micrographs of various inorganic bonds between fired ceramic fibers, at different magnifications, according to the present invention;

FIG. 7 shows an EDS elemental image of a silica bond between fired fibers from Example 12;

FIGS. 8A and 8B are different views of a three-dimensional nonwoven fibrous structure from Example 14;

FIG. 9 is a schematic side view of a filament and web forming process and equipment; and

FIG. 10 is a schematic side view of the filament and web forming process and equipment of FIG. 9, with a patterned mold, like that shown in FIG. 5, disposed on the web forming collector and underneath the collected nonwoven web.

In the drawings, like reference numerals indicate like elements. While the above-identified drawing, which may not be drawn to scale, sets forth various embodiments of the present disclosure, other embodiments are also contemplated, as noted in the Detailed Description. In all cases, this disclosure describes the presently disclosed disclosure by way of representation of exemplary embodiments and not by express limitations. It should be understood that numerous other modifications and embodiments can be devised by those skilled in the art, which fall within the scope of this invention.

## DETAILED DESCRIPTION

For the following Glossary of defined terms, these definitions shall be applied for the entire application, unless a different definition is provided in the claims or elsewhere in the specification.

### Glossary

Certain terms are used throughout the description and the claims that, while for the most part are well known, may require some explanation. It should understood that:

The term "adjoining" with reference to a particular layer means joined with or attached to another layer, in a position wherein the two layers are either next to (i.e., adjacent to) and directly contacting each other, or contiguous with each other but not in direct contact (i.e., there are one or more additional layers intervening between the layers).

By using terms of orientation such as "atop", "on", "over," "covering", "uppermost", "underlying" and the like for the location of various elements in the disclosed coated articles, we refer to the relative position of an element with respect to a horizontally-disposed, upwardly-facing substrate. However, unless otherwise indicated, it is not intended that the substrate or articles should have any particular orientation in space during or after manufacture.

The terms "(co)polymer" or "(co)polymers" includes homopolymers and copolymers, as well as homopolymers or copolymers that may be formed in a miscible blend, e.g., by coextrusion or by reaction, including, e.g., transesterification. The term "copolymer" includes random, block and star (e.g. dendritic) copolymers.

The term "(meth)acrylate" with respect to a monomer, oligomer or means a vinyl-functional alkyl ester formed as the reaction product of an alcohol with an acrylic or a methacrylic acid.

By using the term "separated by" to describe the position of a layer with respect to other layers, we refer to the layer as being positioned between two other layers but not necessarily contiguous to or adjacent to either layer.

The terms "about" or "approximately" with reference to a numerical value or a shape means +/- five percent of the numerical value or property or characteristic, but expressly includes the exact numerical value. For example, a viscosity of "about" 1 Pa-sec refers to a viscosity from 0.95 to 1.05 Pa-sec, but also expressly includes a viscosity of exactly 1 Pa-sec. Similarly, a perimeter that is "substantially square" is intended to describe a geometric shape having four lateral edges in which each lateral edge has a length which is from 95% to 105% of the length of any other lateral edge, but which also includes a geometric shape in which each lateral edge has exactly the same length.

The term "non-respirable polycrystalline, aluminosilicate ceramic filament" means a fiber having a diameter determined using electron microscopy greater than three micrometers.

The "basis weight" of a nonwoven web or mat can be calculated from the weight of a 10 cm × 10 cm web or mat sample.

The "thickness" of a nonwoven web or mat can be measured on a 10 cm × 10 cm web or mat sample using a thickness testing gauge having a tester foot with dimensions of 5 cm × 12.5 cm at an applied pressure of 150 Pa.

The term "Bulk density" is the mass per unit volume of the bulk ceramic material that makes up the web, taken from the literature.

The term "substantially" with reference to a property or characteristic means that the property or characteristic is exhibited to a greater extent than the opposite of that property or characteristic is exhibited. For example, a substrate that is "substantially" transparent refers to a substrate that transmits more radiation (e.g. visible light) than it fails to transmit (e.g. absorbs and reflects). Thus, a substrate that transmits more than 50% of the visible light incident upon its surface is substantially transparent, but a substrate that transmits 50% or less of the visible light incident upon its surface is not substantially transparent.

The term "resiliency" refers to the ability of a filament, a fiber, a nonwoven web, mat or structure, or a fabric to spring back when crushed or wrinkled.

The term "attenuator" refers to the device used to draw or pull a molten polymer or solution into a much reduced diameter filament or fiber.

Air-laying or dry-laid refers to forming a web by dispersing fibers in an air stream and condensing them from the air stream onto a moving screen by means of a vacuum.

The term "cohesive mat or web" refers to a mat or web held together without the use of a binder.

The term "layered mat" refers to the continuous accumulation of filaments on to a perforated moving screen to build thickness and basis weight without post-processing to create additional fiber cohesion or entanglement or cross lapping structure. Due to web formation, layers can be separated into sheets that are a fraction of the overall thickness with relatively short layers in machine direction.

A cross lapper is a machine used to fold or layer fiber webs across their widths. The cross lapper provides webs with both machine direction and cross direction fiber orientation, can change web width, or web weight. The multilayer web is formed on to a conveyor belt by laying thereon a web to and fro at right angles to the direction in which the conveyor belt travels. The orientation of the fibers is dependent on a number of factors, including the speed of the web delivery, the speed of the conveyor belt, and the width of the final web. In many cases, a majority of the fibers will lie in the cross direction. Due to the web formation, individual layers that were folded on top of one another can be separated from one another into relatively long sheets in both machine and cross directions.

Machine direction refers to the direction the web is moving while being formed. Cross direction refers to the direction perpendicular to machine direction.

As used in this specification and the appended embodiments, the singular forms "a", "an", and "the" include plural referents unless the content clearly dictates otherwise. Thus, for example, reference to fine fibers containing "a compound" includes a mixture of two or more compounds. As used in this specification and the appended embodiments, the term "or" is generally employed in its sense including "and/or" unless the content clearly dictates otherwise.

As used in this specification, the recitation of numerical ranges by endpoints includes all numbers subsumed within that range (e.g. 1 to 5 includes 1, 1.5, 2, 2.75, 3, 3.8, 4, and 5).

Unless otherwise indicated, all numbers expressing quantities or ingredients, measurement of properties and so forth used in the specification and embodiments are to be understood as being modified in all instances by the term "about." Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

Exemplary embodiments of the present disclosure may take on various modifications and alterations without departing from the scope of the present invention. Accordingly, it is to be understood that the embodiments of the present disclosure are not to be limited to the following described exemplary embodiments, but is to be controlled by the limitations set forth in the claims and any equivalents thereof.

Various exemplary embodiments of the disclosure will now be described with particular reference to the Drawings. Exemplary embodiments of the present disclosure may take on various modifications and alterations without departing from the scope of the invention. Accordingly, it is to be understood that the embodiments of the present disclosure are not to be limited to the following described exemplary embodiments, but are to be controlled by the limitations set forth in the claims and any equivalents thereof.

## Polycrystalline Aluminosilicate Ceramic Nonwoven Articles

In one exemplary embodiment, the current disclosure describes a nonwoven article, comprising a plurality of polycrystalline, aluminosilicate ceramic substantially continuous or continuous filaments, or discontinuous fibers, entangled to form a cohesive nonwoven web or two-dimensional nonwoven structure (e.g., a mat), respectively. The aluminosilicate ceramic filaments or fiber can have an average mullite percent of at least 45 wt. %. It can be desirable for the filaments and fibers to be non-respirable. The web or two-dimensional nonwoven structure thickness and basis weight can be reached by the continuous accumulation of filaments, or discontinuous fibers, onto a moving perforated screen. In this way, a layered or otherwise continuous web of relatively uniform thickness and basis weight can be formed. Preferably, the cohesive mat exhibits a compression resilience of at least 50 kPa after 1,000 cycles at 900°C when measured according to the Fatigue Test using the open gap setting.

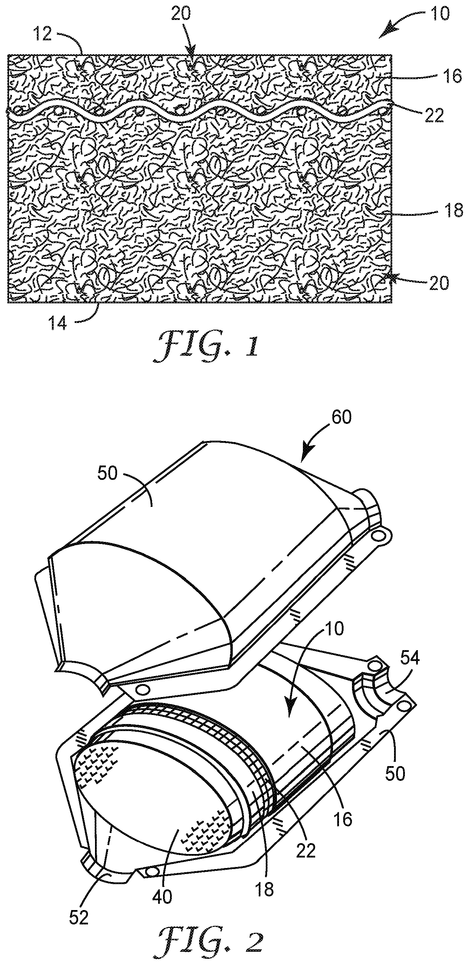

Referring now to Fig. 1, a reinforced nonwoven mat 10 according to embodiments of the present disclosure has a first major surface 12, a second major surface 14 and a thickness (i.e., the distance between surfaces 12 and 14). The nonwoven web or mat 10 has at least a first layer 16 and optionally a second layer 18 and may include one or more additional layers (not shown in the drawings). Each mat layer 16 and optionally mat layer 18, comprises substantially continuous or continuous polycrystalline, aluminosilicate ceramic filaments 20 have an average mullite percent of at least 45 wt. %.

In some exemplary embodiments, the polycrystalline, aluminosilicate ceramic filaments 20 may be used in conjunction with other filaments or fibers, preferably the other filaments or fibers are non-respirable. Thus in certain exemplary embodiments, the reinforced mat 10 may include other filaments or fibers (not shown in the drawing), and preferably non-respirable filaments or fibers, selected from selected from alumina fibers, silica fibers, silicon carbide fibers, silicon nitride fibers, carbon fibers, glass fibers, metal fibers, alumina-phosphorous pentoxide fibers, alumina-boria-silica fibers, zirconia fibers, zirconia-alumina fibers, zirconia-silica fibers, and mixtures or combinations thereof.

In further exemplary embodiments, the polycrystalline, aluminosilicate ceramic filaments or fibers 20 may be used in conjunction with other optional performance enhancing materials (e.g., intumescent materials or inserts, a non-intumescent insert, support meshes, binders, and the like). Thus, in the embodiment shown in Fig. 2, an optional reinforcing mesh 22 is shown disposed between layer 16 and optional layer 18 so as to be generally co-planer with the first major surface 12 and the second major surface 14.

Suitable optional performance enhancing materials are described, for example, in U.S. Pat. Nos. 3,001,571 and 3,916,057 (Hatch et al.); 4,305,992, 4,385,135, 5,254,416 (Langer et al.); 5,242,871 (Hashimoto et al.); 5,380,580 (Rogers et al.); 7,261,864 B2 (Watanabe); 5,385,873 and 5,207,989 (MacNeil); and Pub. PCT App. WO 97/48889 (Sanocki et al.).

In certain exemplary embodiments, the nonwoven web or mat 10 web further comprises a binder to bond together the plurality of polycrystalline, aluminosilicate ceramic filaments the binder is selected from an inorganic binder, an organic binder, and combinations thereof. In some such embodiments, the binder is an organic binder selected from a (meth)acrylic (co)polymer, poly(vinyl) alcohol, poly (vinyl) pyrrolidone, polyethylene oxide, poly(vinyl) acetate, polyolefin, polyester, and combinations thereof. In other embodiments, binder is an inorganic binder selected from silica, alumina, zirconia, kaolin clay, bentonite clay, silicate, micaceous particles, and combinations thereof. Preferably, the optional binder is substantially free of silicone materials.

In one exemplary embodiment, the present disclosure describes a nonwoven web or two-dimensional nonwoven structure comprising a plurality of polycrystalline, aluminosilicate ceramic substantially continuous or continuous filaments or discontinuous fibers, respectively. The discontinuous ceramic fibers of the two-dimensional nonwoven structure have a length equal to the longest or shortest major surface dimension of the two-dimensional nonwoven structure (e.g., the length or width of a mat, sheet or blanket, the circumference of a nonwoven tube or cone, the outer perimeter of a nonwoven box, etc.) or a length in between those dimensions. The layered nonwoven web of continuous or substantially continuous filaments, and the two-dimensional nonwoven structure, exhibits a compression resiliency of at least 50 kPa after 1,000 cycles at 900C when measured according to the Fatigue Test reporting the open gap setting.

In one exemplary embodiment, the present disclosure also describes (a) cohesively bonded nonwoven webs made of substantially continuous or continuous filaments bonded together by a fired precursor inorganic binder (e.g., siloxane) and (b) cohesively bonded two-dimensional nonwoven structures made of discontinuous fibers of a length equal to the longest or shortest major surface dimension of the two-dimensional nonwoven structure, a length in between those dimensions, or a length less than the shortest major surface dimension.

In one exemplary embodiment, the present disclosure also describes cohesively bonded three-dimensional ceramic fiber nonwoven structures that are self-supportive without the need for any organic binder content. Such nonwoven fibrous structures can be in the form of a web, mat, sheet or blanket with three-dimensional patterned shapes formed in one or both of its opposite major surfaces.

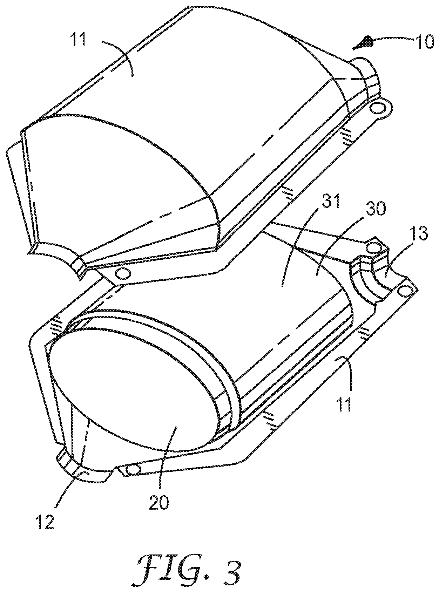

Fig. 3 illustrates atypical example of a pollution control device 10 (e.g., a catalytic converter, particulate filter, etc.) provided with a metal casing 11, a monolithic or multiple component pollution control element 20 (e.g., a catalytic element, filter element, etc.) situated inside the metal casing 11, and a mounting mat 30 (e.g., a catalyst carrier holding material) situated between the metal casing 11 and the pollution control element 20. Mounting mat 30 holds pollution control device element 20 (e.g., a catalytic element) in place in the casing 11 and seals the gap between the element 20 and casing 11 to thus prevent or minimize exhaust gases from by-passing the pollution control element 20. The holding material 30 is constructed of inorganic fibers composed of or comprising alumina silicate fibers. The holding material 30 can have a coating 31 to protect the surface from damage. The coating 31 may be omitted if it is not necessary. An exhaust gas inlet 12 and exhaust gas outlet 13 can each have a truncated cone shape incorporated into the shape of casing 11 of the pollution control element 10.

In certain exemplary embodiments, a precursor inorganic binder is applied to the precursor green nonwoven web or two-dimensional nonwoven structure. The precursor inorganic binder converts into an inorganic bond between fibers during the firing process. In some such embodiments, the precursor binder is from the siloxane family (silicone oil, etc.). Preferably, the precursor inorganic binder is an oil-based liquid, or is otherwise a liquid that does not contain water. At least some liquid precursor inorganic binders can exhibit some surface tension after being applied, which can result in the liquid accumulating at points of intersection and/or contact between adjacent filaments or fibers. After being sufficiently heated (e.g., fired) to cause the precursor to form the inorganic binder, the adjacent filaments or fibers can become bonded at those points of intersection and contact. The degree of bonding points between the filaments and fibers can be adjusted by how much of the precursor inorganic binder is applied, and in the case of a liquid precursor, the viscosity of the liquid precursor. Two-dimensional and three-dimensional nonwoven fibrous structures can be formed in this way.

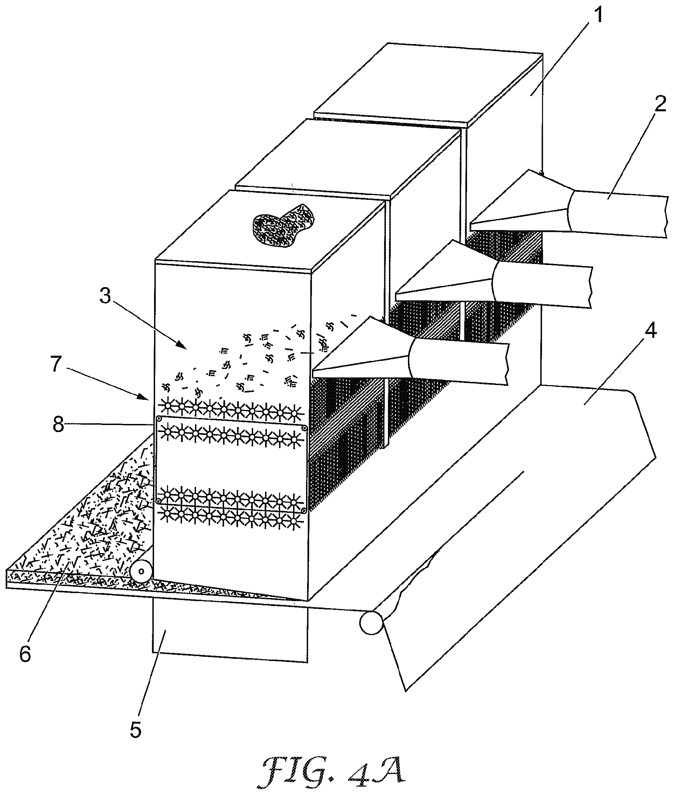

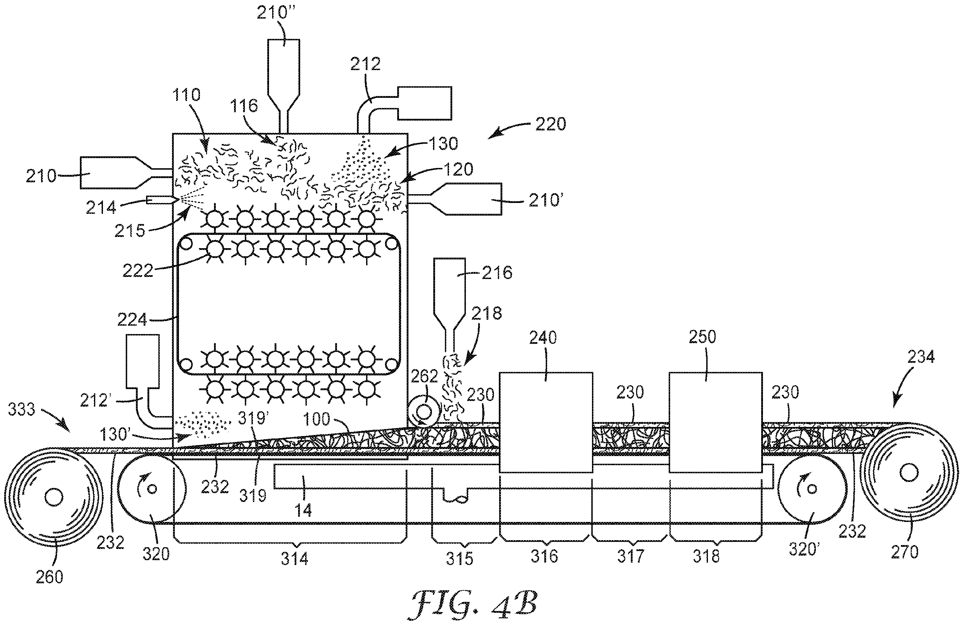

FIG. 4A. shows a -laid or air-laid forming box comprising a housing 1 into which fibers 3 are supplied from an inlet 2. The forming box is positioned above a forming wire 4 onto which the fibers 3 are air laid due to a vacuum box 5 underneath the forming wire 4 to form a fiber mat 6 in a dry forming process. The forming box 5 is shown with the interior elements visible in the housing 1. However, it is realized that the housing walls may be made either from transparent or opaque materials. The discontinuous fibers 3 are blown into the housing 1 of the forming box 5 via the inlet 2. Inside the forming box 5 a number of spike rollers 7 are provided in one or more rows. In the housing 1, an endless belt screen 8 is also provided. This endless belt screen 8 is provided with a conveying path including an upper run, a vertical section where the belt screen 8 moves in a downwards direction, a lower run where the belt screen 8 travels substantially parallel with the underlying forming wire 4 and an upwardly oriented run. The spike rollers 7 disintegrate or shred the lumps of fibers 3 in order to ensure an even distribution of fibers 3 in the continuous or substantially continuous web product 6 formed on the forming wire 4. The inlet is shown positioned above the belt screen 8 and the spike rollers 7. However, it is realized that the inlet may be positioned below the upper run of the belt screen 8, and/or that a multiple of inlets may be provided (see, e.g., FIG. 4B) for supplying different types of fibers and other materials to the forming box. The spike rollers 7 and indeed the belt screen 8 will then assist in mixing the fibers 3 inside the forming box 5. In accordance with the present inventive method, a continuous or substantially continuous nonwoven web can be made from the discontinuous fibers 3 deposited on the forming wire 4 and transported out of the forming box for further processing (e.g., by being separated into discrete lengths for form multiple two-dimensional nonwoven structures such as a mat).

FIG. 5 shows a schematic of a rubber mold constructed from a rectangular sheet 319' of thick rubber in which several square blind-holes or through-holes 500 were cut out in a regular pattern.

FIG. 6A shows a Scanning Electron Micrograph captured at a magnification of 990X of an inorganic bond (highlighted inside the circled section) between fired ceramic fibers from Example 12.

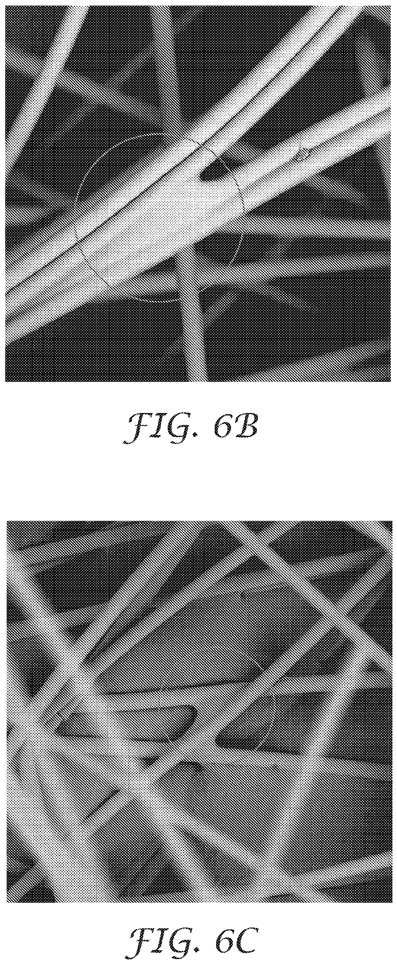

FIGS. 6B-6E show additional Scanning Electron Micrographs of various inorganic bonds between fired ceramic fibers, at different magnifications, according to the present invention;

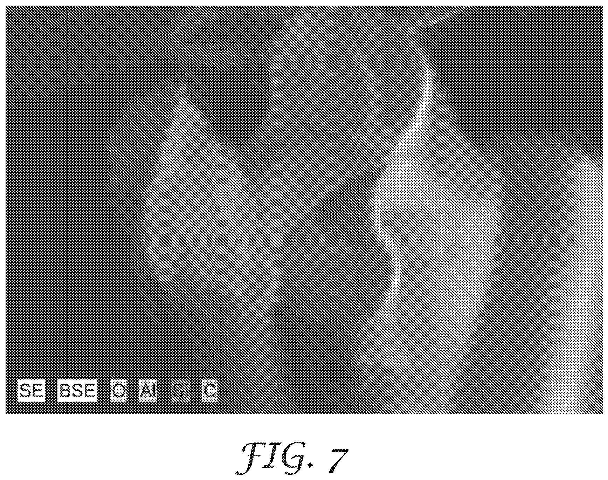

FIG. 7 shows an EDS elemental image of a silica bond between fired fibers from Example 12;

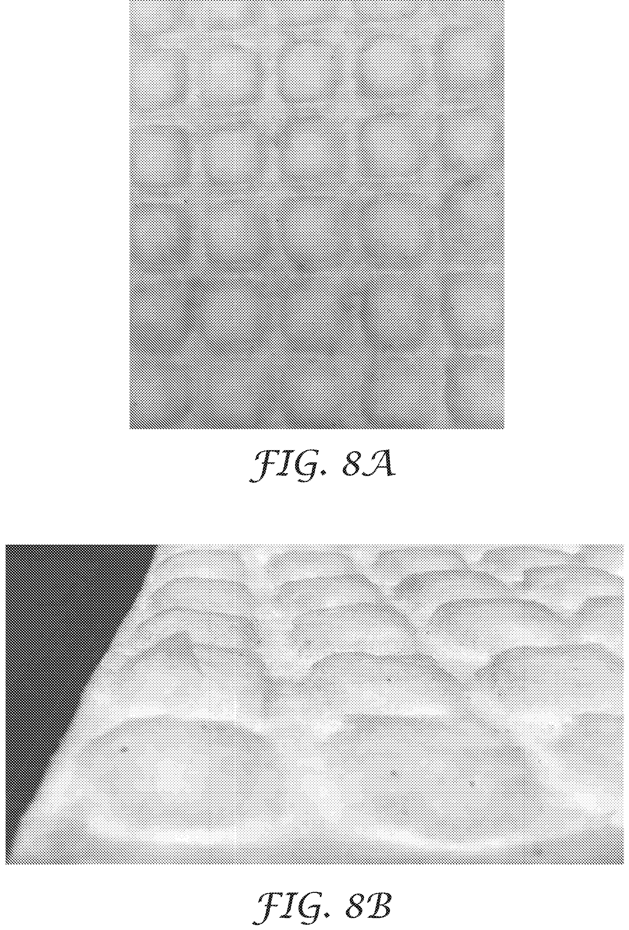

FIGS. 8A and 8B are different views of a three-dimensional nonwoven fibrous mat from Example 14;

Referring to FIG. 9, a filament and web forming process and equipment, according to the present invention, can include providing a source 32 of aqueous ceramic precursor sol and flowing the sol from the source 32 (e.g., a storage tank) through one or more orifices of a spinneret 33 to produce one or more corresponding green filaments 34 that are substantially continuous or continuous. The green filament(s) 34 are passed through drying equipment 35, to remove at least a portion of the water from, and thereby produce one or more partially dried filament(s) 36. The partially dried filament(s) 36 are then passed through equipment 37 (e.g., an attenuator) to be drawn out and/or segmented to form a drawn/segmented partially dried filament(s) 38 having a desired diameter and length. It can be desirable for the partially dried filament(s) 38 to have a diameter that will result in the final ceramic filament(s) or fiber(s) (not shown) having a diameter not less than or equal to three micrometers. Upon exiting the drawing/segmenting equipment 37, it can be desirable to have a station 42 for spraying a precursor inorganic binder onto the dried filament(s) 38. The dried filament(s) 38 can then be collected (e.g., as a nonwoven web 39) on a collector surface, such as a porous and continuous collector belt 43. The resulting dried filament(s) 38 can then be directly transported, or first packaged and then transported, through a furnace (not shown) and then sufficiently heated (e.g., fired) to transform the partially dried filament(s) 38 into the final ceramic filament(s) or fiber(s) (not shown) and, if applicable, cause the precursor inorganic binder to form the inorganic binder and, preferably, bond together adjacent filaments or fibers at points of intersection and contact.

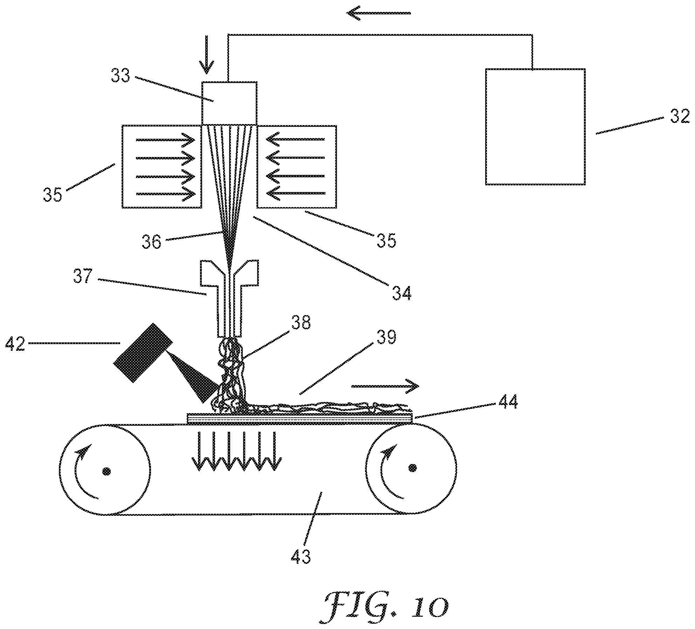

Referring to FIG. 10, in one embodiment of the filament and web forming process and equipment of FIG. 9, a patterned mold 44, like that shown in FIG. 5, can be disposed on the web forming collector 43 and underneath the collected filaments 38.

## Non-respirable, Polycrystalline, Aluminosilicate Ceramic Filaments or Fibers

In some exemplary embodiments of the foregoing nonwoven articles, each of the plurality of polycrystalline, aluminosilicate ceramic filaments or fibers is non-respirable and exhibits a diameter of at least 3 micrometers ($\mu$m), 4 $\mu$m, 5 $\mu$m, 6 $\mu$m, 7 $\mu$m, 8 $\mu$m, 9 $\mu$m, 10 $\mu$m, 11 $\mu$m, or even 12 $\mu$m, as determined using the Filament Diameter Measurement Procedure with electron microscopy, as described further below.

In certain exemplary embodiments, the plurality of non-respirable, polycrystalline, aluminosilicate ceramic filaments or fibers exhibit an average diameter greater than 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, or even 12 $\mu$m, as determined using the Filament Diameter Measurement Procedure with electron microscopy, as described further hereafter. In some such exemplary embodiments, the average diameter of the plurality of non-respirable, polycrystalline, aluminosilicate ceramic filaments or fibers is no greater than 100 $\mu$m, 75 $\mu$m, 60 $\mu$m, 50 $\mu$m, 40 $\mu$m, 30 $\mu$m, 20 $\mu$m, or even 15 $\mu$m.

In certain presently preferred embodiments, the plurality of non-respirable, polycrystalline, aluminosilicate ceramic filaments or fibers exhibit a Process Capability Index ($C_{pk}$) for fiber diameters greater than three micrometers of at least 1.33 as determined using the Filament Diameter Measurement Procedure with electron microscopy, as described further below. In further exemplary embodiments, the plurality of non-respirable, polycrystalline, aluminosilicate ceramic filaments or fibers exhibit a Process Performance Index ($P_{pk}$) for fiber diameters greater than three micrometers of at least 1.33 as determined using the Filament Diameter Measurement Procedure with electron microscopy, as described further below.

In further exemplary embodiments, the plurality of polycrystalline, aluminosilicate ceramic discontinuous fibers have a length of at least 3 mm, 4 mm, 5 mm, 6 mm, 7, mm, 8 mm, 9 mm, or even 10 mm or larger. In some such exemplary embodiments, each of the plurality of polycrystalline, aluminosilicate ceramic filaments is substantially continuous or continuous. By substantially continuous, it is meant that the filaments, while having opposing ends or termination points, nevertheless behave as continuous filaments with respect to their processing characteristics and handleability. Substantially continuous filaments can have a length in the range of from at least about 1000 mm up to about 10,000 or greater, and in any range within that broader range (e.g., from about 1,160 mm up to about 9,190 mm, from about 1,450 mm up to about 8,170 mm, from about 2,050 mm up to about 8,960 mm, from about 2,600 mm up to about 8,190 mm, from about 3,100 mm up to about 7,890 mm, from about 3,750 mm up to about 6,950 mm, etc.), in increments of 5 mm. Continuous filaments can be even longer. Thus, in certain exemplary embodiments, the plurality of polycrystalline, aluminosilicate ceramic filaments may have lengths of from 1,250 mm to at most 9,990 mm, 2100 mm to at most 8,750 mm, 2,250 mm to at most 7,500 mm, or even 3,500 mm to at most 6,250 mm. Discontinuous fibers can have lengths in the range of from about 3 mm up to about 1000 mm, and in any range within that broader range (e.g., from about 6 mm up to about 997 mm, from about 19 mm up to about 873 mm, from about 35 mm up to about 696 mm, from about 60 mm up to about 990 mm, from about 108 mm up to about 890 mm, from about 250 mm up to about 650 mm, etc.), in increments of 1 mm

In further exemplary embodiments, the bulk density of the cohesive or bonded nonwoven web, two-dimensional nonwoven structure and/or three-dimensional nonwoven structure may range from 0.05 to 0.3 g/cm$^3$, 0.06 to 0.25 g/cm$^3$, or even 0.07 to 0.2 g/cm$^3$. In some exemplary embodiments, the thickness of the cohesive or bonded nonwoven web, two-dimensional nonwoven structure and/or three-dimensional nonwoven structure can be at least 1 mm, 2 mm, 2.5 mm, 5 mm, 7.5 mm, 10 mm, 20 mm, 30 mm, 40 mm, or even 50 mm, or more. In some such exemplary embodiments, the thickness of the cohesive or bonded nonwoven web, two-dimensional nonwoven structure and/or three-dimensional nonwoven structure can be at most 100 mm, 90 mm, 80 mm, 70 mm, or even 60 mm or less.

In additional exemplary embodiments, the basis weight of the nonwoven web, two-dimensional nonwoven structure and/or three-dimensional nonwoven structure can be at least 15 g/m$^2$ (gsm), 20 gsm, 25 gsm, 30 gsm, 35 gsm, 40 gsm, 45 gsm, 50 gsm, 55 gsm, 60 gsm, 65 gsm, 70 gsm, 75 gsm, 80 gsm, 85 gsm, 90 gsm, 95 gsm, 100 gsm, or even higher. In some such exemplary embodiments, the basis weight is no more than 4,000 gsm, 3,000 gsm, 2,000 gsm, 1,000 gsm, 750 gsm, 500 gsm, 250 gsm, or even lower.

In some exemplary embodiments, the plurality of non-respirable, polycrystalline, aluminosilicate ceramic filaments have an alumina to silica ratio in the range of 60:40 to 90: 10 by weight, more preferably 60:40 to 75:25 by weight, 70:30 to 74:26 by weight, or even 72:28 to 76:24 by weight. It is currently most preferred that an alumina to silica ratio of 76:24 by weight be used.


**Articles Including Polycrystalline, Aluminosilicate Ceramic Nonwoven Mats**

In another aspect, the present disclosure describes an article including the foregoing nonwoven aluminosilicate ceramic webs web having a multiplicity of polycrystalline, aluminosilicate ceramic filaments. It can be desirable for the discontinuous fibers to be non-respirable. In some such embodiments, the article may be selected from a filtration article, a thermal insulation article, an acoustic insulation article, a fire protection article, a mounting mat article, a gasket article, a catalyst support article, an abrasive article, and combinations thereof. In certain exemplary embodiments, the article is incorporated in a pollution control device,

In certain such exemplary embodiments, the disclosure provides a pollution control device comprising the polycrystalline aluminosilicate ceramic filaments, nonwoven articles, webs and mats described above. In some such exemplary embodiments, the pollution control device is selected from the group consisting of a catalytic converter, a muffler, and combinations thereof.

Referring now to Fig. 2, a pollution control device 60 (e.g., a catalytic converter and/or an exhaust filter), according to the present disclosure, can comprise a housing 50, a pollution control element 40 (e.g., a catalytic element and/or filter) mounted inside of the housing 50, and a mounting mat 10 like those described herein sandwiched between so as to mount the element 40 within the housing 50. The housing 50 is typically made of a metal such as, for example stainless steel, and includes an inlet 52 and an outlet 54 to allow exhaust gases from an internal combustion engine to pass through the device 60. The element 40 is typically a thin walled monolithic structure that is relatively fragile. The mat 10 provides protection for the element 40 from both thermal and mechanical (e.g., vibrational) related damage.

It can be desirable for an optional mesh 22 to be positioned close to the surface 12 of the mat 10 (i.e., for the layer 16 to be relatively thinner than the layer 18). For example, with a mat 10 having a total weight of about 1600 g/m$^2$, and the netting 22 having a weight in the range of from about 80 to about 160 g/m$^2$, it can be desirable for the layer 16 to have a weight in the range of from about 40 to about 800 g/m$^2$. Put another way, it can be desirable for the layer 16 to comprise in the range of from 3% to 10% of the total weight of the mat 10.

Thus, in some exemplary embodiments, the pollution control device further comprises an intumescent layer, a reinforcing mesh, a non-intumescent insert, or a combination thereof. Suitable intumescent layers, reinforcing meshes, and non-intumescent inserts are described, for example, in U.S. Pat. Nos. 3,001,571 and 3,916,057 (Hatch et al.); 4,305,992, 4,385,135, 5,254,416 (Langer et al.); 5,242,871 (Hashimoto et al.); 5,380,580 (Rogers et al.); 7,261,864 B2 (Watanabe); 5,385,873 and 5,207,989 (MacNeil); and Pub. PCT App. WO 97/48889 (Sanocki et al.).

In some such exemplary embodiments, the pollution control device may be installed in a motor vehicle exhaust system of a motor vehicle selected from an automobile, a motorcycle, a truck, a boat, a submersible, or an aircraft.

## Methods of Making Polycrystalline Ceramic Fibers and Nonwoven Mats

In another aspect, the disclosure describes a method of making a nonwoven web, comprising:

flowing an aqueous ceramic precursor sol through at least one orifice to produce at least one substantially continuous or continuous filament, wherein the aqueous ceramic precursor sol comprises at least one of alumina particles or silica particles dispersed in water, and further wherein the aqueous ceramic precursor sol further comprises at least one of a hydrolysable aluminum-containing compound or a hydrolyazable silicon-containing compound;
removing at least a portion of the water from the at least one substantially continuous or continuous filament to at least partially dry the at least one substantially continuous or continuous filament;
passing the at least partially dried filament through an attenuator to draw the at least partially dried filament to a diameter that will result in the final ceramic filament or fiber having a diameter not less than or equal to three micrometers; and
collecting the at least partially dried filaments as a nonwoven web on a collector surface.

In some such exemplary methods, the at least one orifice comprises a plurality of circular orifices positioned in a multi-orifice die in flow communication with a source of the aqueous ceramic precursor sol. Optionally, each of the plurality of orifices has an internal diameter of from 50 to 500 $\mu$m, 75 to 400 $\mu$m, or even 100 to 250 $\mu$m.

In some presently-preferred embodiments, the method further comprises directing a stream of gas proximate the at least one substantially continuous or continuous filament to at least partially dry the at least one substantially continuous or continuous filament. It is presently-preferred that the stream of gas is heated. Generally, the stream of gas should be heated to a temperature of at least 50 °C, 75 °C, 100 °C, 125 °C, 150 °C, 200 °C, 250 °C, or even higher temperature.

A suitable apparatus and exemplary orifices useful in practicing various embodiments of the presently disclosed method of producing the at least one substantially continuous or continuous filament are described in U.S. Patent No. 6,607,624.

In one particularly-preferred embodiment, the nonwoven web is heated (e.g., fired) at a temperature and for a time sufficient to convert the nonwoven web to a bulk/loose, layered, cohesive, and/or bonded nonwoven web or mat comprised of at least one polycrystalline, aluminosilicate ceramic filament having an average mullite percent of at least 45 wt. %. It can be desirable for the discontinuous fibers to be non-respirable. In general, the nonwoven web of green filaments or fibers should be heated to a firing temperature of at least 500 °C, 750 °C, 1,000 °C, 1,250 °C, 1,500 °C, or even higher temperature. Higher firing temperatures may result in shorter firing times, and conversely, longer firing times may permit use of lower firing temperatures. In general, the firing time should be at least 30 minutes, 1 hour, 1.5 hours, 2 hours, 2.5 hours, 3.0 hours, 3.5 hours, 4 hours, 4.5 hours, 5 hours, 5.5 hours, 6.0 hours, 6.5 hours, 7.0 hours, 7.5 hours, 8.0 hours, 8.5 hours, 9.0 hours, 9.5 hours, 10 hours, or even longer. In general, the firing time should be less than 24, 23, 22, 21, 20, 19, 18, 17, 16, 15, 14, 13, 12, 11, or even 10 hours. Suitable firing furnaces (i.e., kilns) are well known to those skilled in the art, for example, the continuous kilns manufactured by HED International, Inc. (Ringoes, NJ).

The aqueous ceramic precursor sol comprises at least one of alumina particles or silica particles dispersed in water. Suitable alumina and silica sols are described, for example, in US 7,182,999 (Hiroyuki Ohashi et al.), and possibly also in U.S. Pat. Nos. 5,380,580 (Rogers et al.); 8,124,022 (Howorth et al.). The aqueous ceramic precursor sol can further comprise at least one of a hydrolysable aluminum-containing compound or a hydrolyazable silicon-containing compound. Suitable ceramic precursor sols are described in U.S. Pat. Nos. 3,760,049 (Borer et al.) and 4,954,462 (Wood et al.).

The aqueous ceramic precursor sol further comprises at least one of a hydrolysable aluminum-containing compound or a hydrolyazable silicon-containing compound. Suitable hydrolysable aluminum-containing and silicon-containing compounds are described, for example, in U.S. Pat. No. 5,917,075 (Wolter); and U.S. Pub. Pat. App. No. 2002/0098142 (Brasch et al.). In certain presently-preferred embodiments, the aqueous ceramic precursor sol comprises aluminum chlorohydrate and dispersed silica particles.

Optionally, the aqueous ceramic precursor sol further comprises at least one of a water soluble (co)polymer and a defoamer. Any suitable water soluble (co)polymer may be used; however, poly(vinyl) alcohol, poly(vinyl) alcohol-co-poly(vinyl) acetate copolymers, poly(vinyl) pyrrolidone, polyethylene oxide), and polyethylene oxide)-co-(propylene oxide) copolymers, have been found particularly suitable. Any suitable defoamer may be used; however, when medium degrees of hydrolysis (e.g., 50-90% poly(vinyl) acetate) poly(vinyl) alcohol-co-poly(vinyl) acetate copolymers are used, defoamers based on long chain alcohols like 1-octanol, and polyol esters such as the FOAM-A-TAC series of antifoams available from Enterprise Specialty Products Inc. (Laurens, SC), for example, FOAM-A-TAC 402, 407, and 425.

Inorganic bonds can be created to consolidate the cohesiveness and strength of the polycrystalline fiber nonwoven webs, two-dimensional nonwoven structures, and three-dimensional nonwoven structures of the present invention. Precursor inorganic binders applied to the green filament or fiber nonwoven structures should not contain any water, because green fibers are soluble in water until they are fired/sintered, or at least partially fired/sintered. Polymeric organosilicon compounds (commonly referred to as silicones) such as polydimethylsiloxane can be used as a precursor inorganic binder.

**Optional Processing Steps**

Certain optional processing steps may be found advantageous in practicing various exemplary embodiments of the present disclosure. For example, the cohesive ceramic mats may be subjected to at least one of needle-punching, stitch-bonding, hydro-entangling, binder impregnation, and chopping of the cohesive mat into discreet or discontinuous fibers.

Thus, in one currently contemplated exemplary embodiment, the cohesive mat may be chopped to produce a plurality of discrete, polycrystalline, aluminosilicate ceramic fibers wherein the plurality of discrete, polycrystalline, aluminosilicate ceramic filaments each has a diameter of at least three micrometers as determined using the Filament Diameter Measurement Procedure with electron microscopy. It can be desirable for the discontinuous fibers to be non-respirable. The resulting chopped fibers may then be further processed, for example, using at least one of wet-laying or air-laying, to form a fibrous ceramic mat include discrete, aluminosilicate ceramic fibers. Preferably, the resulting fibrous ceramic mat exhibits a compression resilience of at least 30 kPa after 1,000 cycles at 900°C when measured according to the Fatigue Test using the open gap setting.

Embodiments of fibrous nonwoven mounting mats described herein can be made, for example, by feeding chopped, individualized fibers (e.g., about 2.5 cm to about 5 cm in length) into a lickerin roll equipped with pins such as that available from Laroche (Cours la ville, France) and/or conventional web-forming machines commercially available, for example, under the trade designation "RANDO WEBBER" from Rando Machine Corp. (Macedon, N.Y); "DAN WEB" from ScanWeb Co. (Denmark), wherein the fibers are drawn onto a wire screen or mesh belt (e.g., a metal or nylon belt). If a "DAN WEB"-type web-forming machine is used, the fibers are preferably individualized using a hammer mill and then a blower. To facilitate ease of handling of the mat, the mat can be formed on or placed on a scrim.

Embodiments of fibrous nonwoven mounting mats described herein can be also made, for example, using conventional wet-forming or textile carding. For wet forming processes, the fiber length is often from about 0.5 cm to about 6 cm.

In some exemplary embodiments, particularly with wet forming processes, a binder may be advantageously used to facilitate formation of the mat. In some embodiments, nonwoven mats described herein comprise not greater than 10 (in some embodiments not greater than 4, 3, 2, 1, 0.75, 0.5, 0.25, or even not greater than 0.1) percent by weight binder, based on the total weight of the mat, while others contain no binder.

Optionally, some embodiments of fibrous nonwoven mounting mat described herein are needle-punched (i.e., where there is physical entanglement of fibers provided by multiple full or partial (in some embodiments, full) penetration of the mat, for example, by barbed needles). The nonwoven mat can be needle punched using a conventional needle punching apparatus (e.g., a needle puncher commercially available, for example, under the trade designation "DILO" from Dilo Gmbh (Germany), with barbed needles commercially available, for example, from Foster Needle Company, Inc. (Manitowoc, WI) or Groz-Beckert Group (Germany), to provide a needle-punched, nonwoven mat.

Needle punching, which provides entanglement of the fibers, typically involves compressing the mat and then punching and drawing barbed needles through the mat. The efficacy of the physical entanglement of the fibers during needle punching can be generally improved when the polymeric and/or bi-component organic fibers are included in the mat construction. The improved entanglement can further increase tensile strength and improve handling of the nonwoven mat. The optimum number of needle punches per area of mat will vary depending on the particular application.

Typically, the nonwoven mat is needle punched to provide about 5 to about 60 needle punches/cm$^2$ (in some embodiments, about 10 to about 20 needle punches/cm$^2$.

Optionally, some embodiments of mounting mat described herein are stitchbonded using conventional techniques (see e.g., U.S. Pat. No. 4,181,514 (Lefkowitz et al.) for its teaching of stitchbonding nonwoven mats). Typically, the mat is stitchbonded with organic thread. A thin layer of an organic or inorganic sheet material can be placed on either or both sides of the mat during stitchbonding to prevent or minimize the threads from cutting through the mat. If it is desirable for the stitching thread to not decompose in use, an inorganic thread, (e.g., ceramic or metal (such as stainless steel) can be used. The spacing of the stitches is usually about 3 mm to about 30 mm so that the fibers are uniformly compressed throughout the entire area of the mat.

The operation of the present disclosure will be further described with regard to the following detailed examples. These examples are offered to further illustrate the various specific and preferred embodiments and techniques. It should be understood, however, that many variations and modifications may be made while remaining within the scope of the present disclosure.

## EXAMPLES

These Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

### Summary of Materials

Unless otherwise noted, all parts, percentages, ratios, etc. in the Examples and the rest of the specification are by weight. Solvents and other reagents used may be obtained from Sigma-Aldrich Chemical Company (Milwaukee, WI) unless otherwise noted. In addition, Table 1 provides abbreviations and a source for all materials used in the Examples below:

**Table 1: Materials**

| Name | Description | Source |
|---|---|---|
| DelPAC XG | $Al_2(OH)_5Cl$, aluminum chlorohydrate (ACH, 22.17% $Al_2O_3$) | USALCO, LLC, Baltimore, MD |
| Nalco 1034A | 35.60% Aqueous Colloidal Silica Sol | Nalco Corp., Naperville, IL |
| Selvol 523 | Polyvinyl Alcohol | Sekisui Specialty Chemical, LLC, Dallas, TX |

### Test Methods

The following test methods have been used in evaluating some of the Examples of the present disclosure.

Mullite Content Measurement Procedure:

Powder x-ray diffraction was used to measure mullite content using an internal standard method. Titanium oxide, rutile (99.99%), from Alfa Aesar (Ward Hill, MA) was used as the internal standard and uniformly mixed into sample powders at 10 wt%. The integrated intensities of the 16.4 degree 2θ mullite peak and the 26.4 degree 2θ rutile peak were measured. Control samples with known mullite content were analyzed to establish a calibration curve relating mullite content to the relative integrated intensity of the mullite and rutile peaks. The mullite content of example materials was determined by measuring the relative integrated intensity of the mullite and rutile peaks and then reading the mullite percentage from the calibration curve. Powders were analyzed in triplicate with a Rigaku MiniFlex 600 diffractometer (Tokyo, Japan) using Cu $K_\alpha$ radiation.

Filament or Fiber Diameter Measurement Procedure:

Images of cross-sections of exemplary mats (i.e., handsheets) of the present disclosure were collected using a Phenom Pure Scanning Electron Microscope from PhenomWorld (Eindhoven, The Netherlands), at a magnification of at least 500X. At least 80 filaments or fibers were measured per sample using Fibermetric software from PhenomWorld.

The following Filament or Fiber Diameter statistics were determined using Minitab statistical analysis software available from Minitab, Inc. (State College, PA):

$C_{pk}$ (Process Capability Index) is a statistical measure of process capability: it measures how close a process is running to its specification limits, relative to the natural variability of the process. $C_{pk}$ is defined as:

$$C_{pk} = \frac{\overline{x} - LSL}{3\sigma}$$

wherein $\bar{x}$ is the mean filament or fiber diameter, *LSL* is the lower specification limit (3 $\mu$m), and $\sigma$ is the sample standard deviation for the fiber diameter.

P$_{pk}$ (Process Performance Index) is an estimate of the process capability of a process during its initial set-up, before it has been brought into a state of statistical control. P$_{pk}$ is defined as:

$$P_{pk} = \min \left[ \frac{USL - \bar{x}}{3\sigma} \cdot \frac{\bar{x} - LSL}{3\sigma} \right]$$

wherein $\bar{x}$ is the mean filament or fiber diameter, USL is the upper specification limit (3 $\mu$m), *LSL* is the lower specification limit (3 $\mu$m), and $\sigma$ is the sample standard deviation for the population of fiber diameters.

PPM (Part Per Million) is a measurement used to measure quality performance. One PPM means one (defect or event) in a million or 1/1,000,000.

C$_{pk}$ and P$_{pk}$ are quality indexes used to evaluate products and process quality. To ensure conformance to a specification, product characteristics with a C$_{pk}$ less than 1.33 (4 sigma) typically must be inspected to remove defective products, which is undesirable in that it adds to the cost and complexity of a manufacturing operation.

Fatigue Test (Mat Compression Measurements for 1,000 cycles at 900 °C):

Fiber mat samples were fatigue tested in a furnace at 900 °C by placing the samples in the variable gap between two quartz pucks attached to a uniaxial load cell located outside the furnace, then cycling the gap between the pucks from an expanded or "open gap" mat position to a compressed or "closed gap" mat position. The test generally follows the procedure outlined in the section titled "Heated Cyclic Compression Test" in column 10, lines 6-27 of commonly owned U.S. Patent Nos. 5,736,109; 7,704,459 and 8,007,732.

A 1 inch (2.54 cm) or 2 inch (5.08 cm) diameter test sample was cut from the polycrystalline, aluminosilicate ceramic filament mats. Samples were weighed and their weight was recorded. Based on sample weight, the open gap opening (target density 0.36 g/cc) and closed gap opening (target density 0.40 g/cc) were calculated using the following equation: density (g/cc) = sample basis weight (g/cm$^2$) / gap (cm).

*Summary of the Test Protocol*

A Material Test System (MTS) Model 812.05 from MTS Systems Corporation (Eden Prairie, Minnesota) or equivalent, with 0- 9 kN load cell and build-in height measuring device was used, along with a furnace capable of heating the entire sample to 900 °C.

*Sample Preparation Conditions*

1. Die cut either a 1" or 2 inch diameter = 50.8 mm +/- 0.2 mm
2. Weigh the sample on a scale accurate to .01 grams and record the mass
3. Calculate required gaps based on sample weight and required mount densities

*Test Conditions*

1. Place sample between quartz discs and close to the required closed gap setting.
2. Close furnace and start ramp to a temperature of 900 °C (one hour)
3. Once 900 °C temperature is reached dwell for five minutes before cycling begins
4. After five minute dwell at 900 °C, start cycling of the gap between closed gap setting and open gap setting.
5. Cycle time is 27 seconds. One cycle is defined as the time it takes for the gap to cycle from closed gap through open gap and back to closed gap. Gap continually changes between closed and open gaps without dwell time at either during test.
6. Record open gap pressure after 1000 cycles.

*Data Acquisition (Load and Peak/Valley)*

1. Starts at the onset of the cycling segment and ends once the cycling segment completes. The load data acquisition is segmented into two parts. The first part records data every cycle for the first hundred cycles, while the second part records data every hundred cycles for the remainder of the cycling segment.

2. The peak/valley acquisition records data when the axial stroke signal reaches a peak or valley (i.e. minimum and maximum gap)

3. Signals Recorded:

   a. Axial Count
   b. Axial Load
   c. Axial Stroke
   d. Actual Temperature

4. The remaining resistance pressure (in kPa) of the mat sample against the quartz pucks with the test device in the open gap position after 1000 cycles at 900 °C is reported in the table below as "Open C1k."

## Sol Making Methods

Aluminum chlorohydrate (ACH) of general formula $Al_2(OH)_5Cl$ sold under the trade designation DelPAC XG was obtained from USALCO, LLC, of Baltimore, MD. The colloidal silica used was Nalco 1034A from Nalco of Naperville, IL. Polyvinylalcohol (PVA) in this report was partially hydrolyzed (87-89%) and high molecular weight, sold as Selvol 523 available from Sekisui Specialty Chemical of Dallas, TX. The PVA solution was dissolved in deionized water by heating to 90-95°C and had 0.027% n-octanol added. The concentration of organic additive in sol in all cases is a weight % of the additive with respect to alumina.

Sol Making Method 1 (for ACH sol 72/28 $Al_2O_3$:$SiO_2$, 10% PVA)

Acid stabilized colloidal silica (Nalco 1034A, 35.60% silica), 2663.09 g, was diluted to 20% silica with water (2077.21 g) and then either added dropwise via addition funnel or by pouring slowly to 10,996.25 g aluminum chlorohydrate (ACH, 22.17% $Al_2O_3$). A 5% poly(vinyl) alcohol (high MW, 88-89% hydrolyzed) solution with 0.027% *n*-octanol added (5419.00 g) was added via pouring to the stirring ACH/$SiO_2$ mixture. Additional *n*-octanol (~0.80 g) was added as an anti-foaming agent before filtration. The solution was filtered through a 0.45 um glass fiber filter. The solution was then concentrated at a pressure of 10-20 mbar in a 40 °C bath.
Four batches were concentrated on four consecutive days. The viscosities of batches 1-4 were roughly 47,000, 87,000, 12,000, and 57,000 cP after one day and were all combined together to give a sol of about 35,000 cP.

Sol Making Method 2 (for ACH sol 76/24 $Al_2O_3$:$SiO_2$, 15% PVA)

Acid stabilized colloidal silica (Nalco 1034A, 34.90% silica), 156.94 g, was diluted to 20% silica with water (123.13 g) and then added dropwise via addition funnel to 800.00 g aluminum chlorohydrate (ACH, 22.17% $Al_2O_3$). A 5% poly(vinyl) alcohol (high MW, 88-89% hydrolyzed) solution with 0.027% n-octanol added (625.99 g) was added via pouring to the stirring ACH/$SiO_2$ mixture. Additional n-octanol (~0.10 g) was added as an anti-foaming agent before filtration. The solution was filtered through a 0.45 um glass fiber filter. The solution was then concentrated at a pressure of 20 mbar in a 40 °C bath. The viscosity was roughly 47,000 cP after concentration.

## Fiber Spinning Methods

Fibrous nonwoven green (i.e., unfired) fiber webs were prepared by delivering an inorganic sol gel solution through a spinneret assembly with multiple orifices, to form a stream of filaments, drying and drawing the filaments as they move down, and then intercepting the stream of filaments on a porous collector. The filaments deposited on the collector as a mass of fibers (bulk or mat) were fired as formed, and after post-processing. Fired fibers could also be post-processed. Post-processes include but are not limited to needle tacking, chopping, wet-laying (i.e., making into a water based slurry), dry-laying (e.g., air-laying or use of a carding machine such as a Rando-Webber (available from Rando Machine Corporation, Macedon, NY), and the like.

Fiber Spinning Method 1

Green fiber or filament webs were produced using a spinneret with orifices 5 mil (0.13 mm) in diameter, and a length to diameter (L/D) ratio of 2/1. Sol was placed in a pressure pot, and pressurized with compressed air at about 50 psi (0.34 MPa.) Sol was delivered to the spinneret via a metering pump (1.168 cc/rev), available from Zenith Pumps (Monroe, NC). Drying equipment delivered heated air perpendicular to fiber direction. The drying zone was about 24 in (61 cm) in length. Green fibers were drawn down by an air venturi apparatus placed about 7 inches (18 cm) below the drying zone. The fiber drawing device was a set of two parallel air knives.

The porous collector belt was positioned about 25 inches (64 cm) below the bottom of the attenuator. The green fibers in examples 2, 4 and 6 were then fired into a final inorganic state (e.g. alumino silicate fiber). For examples 1, 3 and 5, multiple layers were stacked up and needled together before being fired.

Fiber Spinning Method 2

Fiberization was performed inside of a 0.9 × 0.9 × 2.4 m spinning tower with acrylic panels (3M Fabrication Services, St. Paul, MN) using a 40-hole stainless steel die (Kasen Nozzle, Osaka, Japan) with a 6 mil (0.15 mm) orifice diameter, L/D=1, and a hole spacing of 0.18 in. (4.6 mm). Sol was fed using compressed nitrogen (Oxygen Service Company, St. Paul, MN) at a feed pressure of 40 psi (276 kPa). Air diffusers with a 6 × 12 in. (15 × 30 cm) outlet (3M Fabrication Services) were positioned downstream from the die to provide dry heated air to the extruded filaments. Air to the diffusers were provided by two 0.5 HP (0.37 kW) regenerative blowers (Gast Manufacturing, Inc., Benton Harbor, MI), with a total air flow rate of 27 SCFM (0.76 m$^3$/min.).

The air was heated with two 2 kW air heaters (Osram-Sylvania, Wilmington, MA) to 150°C (measured after the heater outlet). A 5 in. (13 cm) wide air attenuator with two parallel plates (3M Fabrication Services) was positioned 32 cm downstream from the air diffuser. The plate gap was set to 0.25 in. (6.4 mm). Air flow into the attenuator was controlled with a rotameter (King Instrument Company, Garden Grove, CA) to a flow rate of 9 SCFM (0.25 m$^3$/min.). After the attenuator, the fibers were dispersed onto a 12 in. (30 cm) diameter vacuum collector drum mounted 38 cm below the attenuator. Exhaust flow through the drum was provided with a 3 HP (2.2 kW) regenerative blower (Mapro International s.p.A., Nova Milanese MB, Italy).

**Green Filament or Fiber Firing Method:**

Firing of green filaments or fibers can be considered to comprise two main segments. The first is a lower temperature pre-fire (burnout) segment in which organics are removed and inorganic phases begin to form. The second is a high temperature crystallization and sintering segment where the fibers densify and high temperature crystalline phases form. The two segments can be performed separately (e.g., a pre-fire followed by cooling to room temperature before sintering) or sequentially in a continuous process (e.g., a pre-fire followed immediately by sintering without allow the material to cool). Herein, the pre-fire segment is considered to occur up to 850 °C and can be successfully performed in as few as 20 minutes or over several hours. Successfully pre-fired filaments and fibers are microstructurally uniform, optically transparent, and easily handled without breakage or dusting. Typically, the filaments and fibers are exposed to water vapor during the pre-fire to improve process consistency but this is not strictly necessary to attain the characteristics described herein. A wide range of water vapor pressures, from 40-450 torr (5,300-60,000 Pa), are useful. Pre-fired filaments and fibers can be sintered by insertion into a box furnace held at a predetermined temperature. The densification of the aluminosilicate ceramic filaments or fibers, and its final phase composition, are determined by the sintering time and temperature. One set of useful time/temperature combinations for sintering range from 1250 °C to 1370 °C for 10 minutes, most preferably from 1270 °C to 1330 °C, but a variety of time/temperature combinations can be used to produce nearly identical results.

**Ceramic Fiber Mats or Webs**

Small Handsheet Preparation Method:

Tap water (900 ml) and 6 grams (g) of inorganic fired discontinuous fibers prepared as described above were added to a blender. The blender was operated on low speed for 10 to 15 seconds. The resultant slurry was rinsed into a mixing container equipped with a paddle mixer using 100 ml of tap water. The diluted slurry was mixed at medium speed to keep solids suspended. Ethylene-vinyl acetate terpolymer latex (obtained under the trade designation "AIRFLEX 600BP" (0.38 g, 55 percent by weight solids) from Wacker Chemical Corporation of Munich, Germany was added. Three drops of flocculent (MP 9307C from Mid South Chemical Co. Inc., of Ringgold, LA) was added. The paddle mixer was removed and the slurry was poured into an 80 mm diameter sheet former and drained. A few sheets of blotter paper were placed on the surface of the drained sheet and pressed down by hand to remove excess water. The sheet was then dried at 140 °C in a forced air oven for 1 hour.

Large Handsheet Preparation Method:

Tap water (3000 ml) and 40 grams (g) of inorganic fired fibers were added to a blender. The blender was operated on low speed for 10 to 15 seconds. The resultant slurry was rinsed into a mixing container equipped with a paddle mixer using 2000 ml of tap water. The diluted slurry was mixed at medium speed to keep solids suspended. Ethylene-vinyl acetate terpolymer latex (obtained under the trade designation "AIRFLEX 600BP" (2.5 g, 55 percent by weight solids) from Wacker Chemical Corporation (Munich, Germany), State) was added. The flocculent MP 9307C from Mid South Chemical Co. Inc., (Ringgold, LA) was added in the amount of 0.25g. The paddle mixer was removed and the slurry was poured into an 8 inch by 8 inch (20 cm $\times$ 20 cm) square sheet former and drained.

A few sheets of blotter paper were placed on the surface of the drained sheet and pressed down by hand to remove excess water. Then, the sheet was pressed between blotter papers at a surface pressure of 20 psi for five minutes. The sheet was then dried at 140 °C in a forced air oven for 1 hour.

**Dry-laid process method**

The dry-laid method comprises the following steps: supplying fibers through an inlet of a forming box having an open bottom positioned over a forming wire to form a mat of fibers on the forming wire, the forming box having a plurality of fiber separating rollers provided in at least one row in the housing between the inlet and housing bottom for breaking apart clumps of fibers and transporting the mat of fibers out of the forming box by the forming wire (see FIGS. 4A and 4B).

**Three-dimensional mat making method 1**

Referring to FIG. 10, green fibers were produced using Fiber spinning method 1. Ceramic composition was 76% Alumina and 24% Silica, with 15% PVA. During fiber collection, a perforated mold with holes cut out in a regular pattern (see FIG. 5) was positioned on the moving belt, and run under the attenuator so that fibers started accumulating into the holes first, then on top of the mold, until a continuous layer was formed on top of the rubber mold. The perforated mold was removed before the material was fired into a ceramic mat following the Green Fiber Firing Method. Fibers in the materials produced with this method are discontinuous.

**Three-dimensional mat making method 2**

Precursor chopped sol gel green fibers (produced using Fiber spinning method 1) were mixed with organic and inorganic fibers, and formed into three dimensional nonwoven webs using a dry-laid process (see FIGS. 4A and 4B). A perforated rubber sheet with square holes cut out in a regular pattern (FIG. 5) was positioned above the moving belt, and run under the forming chamber where the fiber blend started accumulating into the holes first, then on top of the rubber sheet, until a continuous layer was formed on top of the rubber mold. The fibers had lengths that allowed the vacuum located under the belt in the vacuum section to suction force the fiber blend fill the mold cavities, before the fiber blend started to significantly covering the surface of the mold. After the mold cavities are substantially filled, a layer of the fiber blend is allowed to form over the entire top of the mold.

The fiber blend (including precursor green ceramic fibers), still supported by the rubber mold, was transported inside a hot air oven set above the melting temperature of the bicomponent melty fiber included in the fiber blend to consolidate the three-dimensional patterned green fiber nonwoven. After removing the three-dimensional patterned mat from the mold, it was fired into a ceramic nonwoven following Green Fiber Firing Method. Fibers in the materials produced with this method are typically short.

**Comparative Example 1**

Needled Maftec (MLS2) blanket from Mitsubishi Plastic Inc. Tokyo, Japan) at 1100 gsm basis weight (no organic content).

**Comparative Example 2**

Handsheet mat was produced by pulping MLS2 blanket from MPI for 15 sec following the large hand-sheet procedure detailed above.

### Comparative Example 3

Handsheet mat was produced by pulping Saffil 3D+ fiber from Unifrax LLC, Tonawanda, NY, for 12sec following the large hand-sheet procedure detailed in the large hand-sheet preparation section.

### Comparative Example 4

Precursor sol gel alumina silicate fibers were opened/chopped by running through the dry-laid process. Chopped/opened precursor fibers were run on the dry-laid process again and formed on a rubber patterned mold following the Three-dimensional mat making method 2. The targeted basis weight was 1000 g/m2. The sample was run through a hot air oven to try to consolidate the nonwoven. Bicomponent melty fibers were not used in this sample: the sol used to produce the green fiber contains a polymer, which was not efficient enough to bond the green fibers together, and the mat fell apart when the rubber mold was removed. This sample did not have enough cohesion to be run through the firing kiln.

### Comparative Example 5

Precursor sol gel alumina silicate fibers were opened/chopped by running through the dry-laid process line. A fiber blend with 567g of chopped/opened precursor fibers and 29.8 g of bicomponent melty fibers (Trevira 255) were run on the dry-laid process line again and formed on a rubber patterned mold following the Three-dimensional mat making method 2. The green precursor fiber sample was consolidated through a hot air oven and maintained its three dimensional shape. But, when run through the firing kiln, the organic melty fiber burned off and the material fell apart and did not maintain its three-dimensional shape.

### Comparative Example 6

Precursor sol gel alumina silicate fiber were formed directly onto a rubber mold placed on the vacuum belt below the attenuator following the Three-dimensional mat making method 1. A nice pattern with high basis weight and low basis weight was obtained, but very little three dimensional shape was maintained when the rubber mold was removed and the green fiber web was fired into a ceramic. No binder (organic or inorganic) was used in this example

### Comparative Example 7

Precursor sol gel alumina silicate fiber were formed directly onto a rubber mold placed on the vacuum belt below the attenuator following the Three-dimensional mat making method 1. 3M Silicone lubricant was applied to the green fiber web during fiber web formation, below the attenuator. A nice pattern with high basis weight and low basis weight was obtained, but very little three dimensional shape was maintained when the rubber mold was removed.

### Example 1

A green fiber nonwoven web was produced using the Sol Making Method (72/28 alumina/silica) and Fiber Spinning Method 1 described above. The green fiber web was produced with a 160 holes die with 5 mil orifice size (0.30 inch (7.6 mm) spacing), and LID of 2/1. Sol was fed through die using Zenith pump at 20 rpm (1.168 cc/rev), for a theoretical sol rate of 0.233 g/hole/min. Sol was dried with heated air (58 °C) blown at 40 fpm (0.20 m/s) perpendicular to the fiber motion. Sol was attenuated into green fibers by air knifes separated by 0.50 inches (1.3 cm.)
Several layers of green fiber webs were needled together using a custom-made needle board with 15x25x40x3 CB needles from Foster Needle Co. Inc. of Manitowoc, WI at ¾ inch (1.9 cm) square spacing.
Needled green fiber webs were pre-fired by first heating to 750 °C over 50 minutes and then to 850 °C over 40 minutes. Approximately 75 torr of water vapor was introduced when furnace temperatures reached about 130 °C. Final heat treatment of the needled green fiber webs was performed by inserting them for 10 minutes into a furnace preheated to approximately 1300 °C.

### Example 2

A green fiber nonwoven web was produced using the same spinning process and conditions as Example 1. Bulk green fiber webs were fired following the firing profile provided above. A hand-sheet mat was produced using the small hand-sheet mat method and pulping the fibers for 10 sec. The hand-sheet mat was fired according to the procedure in Example 1.

### Example 3

A green fiber nonwoven web was produced using the same sol making process and spinning process as Example 1. The green fiber web was produced with a 160 holes die with 5 mil orifice size (0.30" spacing), and LID of 2/1. Sol was fed through die using Zenith pump at 20 rpm (1.168 cc/rev), for a theoretical sol rate of 0.28 g/hole/min. Sol was dried with heated air (61 °C) blown at 40 fpm perpendicular to the fiber motion. Sol was attenuated into green fibers by air knifes separated by 0.50".

Several layers of green fiber webs were needled together using a custom-made needle board with 15x25x40x3 CB needles from Foster Needle Co. Inc. of Manitowoc, WI at ¾" square spacing. Needled green fiber webs were fired according to the procedure in Example 1.

### Example 4

A green fiber nonwoven web was produced using the same spinning process and conditions as Example 3. Bulk green fiber webs were fired following the firing profile provided above. A hand-sheet mat was produced using the small hand-sheet mat method and pulping the fibers for 10 sec. The hand-sheet mat was fired according to the procedure in Example 1.

### Example 5

A green fiber nonwoven web was produced using the same sol making process and spinning process as Example 1. The green fiber web was produced with a 105 holes die with 5 mil orifice size (0.30" spacing), and LID of 2/1. Sol was fed through die using Zenith pump at 16 rpm (1.168 cc/rev), for a theoretical sol rate of 0.285 g/hole/min. Sol was dried with heated air (75C) blown at 42 fpm perpendicular to the fiber motion. Sol was attenuated into green fibers by air knifes separated by 0.45".

Several layers of green fiber webs were needled together using a custom-made needle board with 15x25x40x3 CB needles from Foster Needle Co. Inc. of Manitowoc, WI at ¾ inch (1.9 cm) square spacing.

Needled green fiber webs were fired following the firing profile provided above. The 1000 cycle test was performed following test method described above. Needled green fiber webs were fired according to the procedure in Example 1.

### Example 6

A green fiber nonwoven web was produced using the same spinning process and conditions as Example 1. Bulk green fiber webs were fired following the firing profile provided above. A hand-sheet mat was produced using the small hand-sheet mat method and pulping the fibers for 10 sec.

### Example 7

A green fiber nonwoven web was produced using the Sol Making Method 2 (76/24 alumina/silica) and Fiber Spinning Method 2 described above. The bulk green fiber web was fired following the firing profile according to the procedure of Example 1, except a sintering temperature of 1285 °C was used.

A hand-sheet mat was produced using the small hand-sheet mat method and pulping the fibers for 10 sec.

### Example 8

Green fiber was spun using the spinning process described above with Sol Making Method 2 (76/24) and Fiber Spinning Method 2. The bulk green fiber web was fired following the firing profile according to the procedure of Example 1, except a sintering temperature of 1315 °C was used.

A hand-sheet (mat) was produced using the small hand-sheet mat method and pulping the fibers for 10 sec.

### Example 9

Green fiber was spun using the spinning process described above with Sol Making Method 2 (76/24) and Fiber Spinning Method 2. The bulk green fiber web was fired following the firing profile according to the procedure of Example 1, except a sintering temperature of 1345 °C was used.

A hand-sheet mat was produced using the small hand-sheet mat method and pulping the fibers for 10 sec.

### Example 10

Three layers of green fiber webs made from with 76% alumina, 24% silica and 15% PVA were stacked up and run through a commercial needle felting machine from Feltloom (Sharpsburg, KY, USA) before being fired with a sintering temperature of 1285 °C and tested in the 1000 cycle test. Final basis weight was about 1200 g/m2 after sintering.

### Example 11

Three layers of fiber webs made from with 76% alumina, 24% silica and 15% PVA (same green fiber web as Example 10) formed at a basis weight of about 400 g/m2 were stacked up before being fired at a sintering temperature of 1285 °C and tested in the 1000 cycle test. Final basis weight was about 1200 g/m2 after sintering. Layers were not mechanically entangled.

### Example 12

Green fiber webs made from with 76% alumina, 24% silica and 15% PVA were formed directly onto a rubber mold placed of the vacuum belt below the attenuator following the Three-dimensional mat making method. Green fibers were uniformly coated with 3M Silicone lubricant spray (3M, St Paul, MN, USA) during fiber collection and accumulation on the rubber mold, below the attenuator. The mold was removed before the thin web was fired at a sintering temperature of 1285 °C. A nice pattern with high basis weight and low basis weight was obtained, but very little three dimensional shape was maintained when the rubber mold was removed.

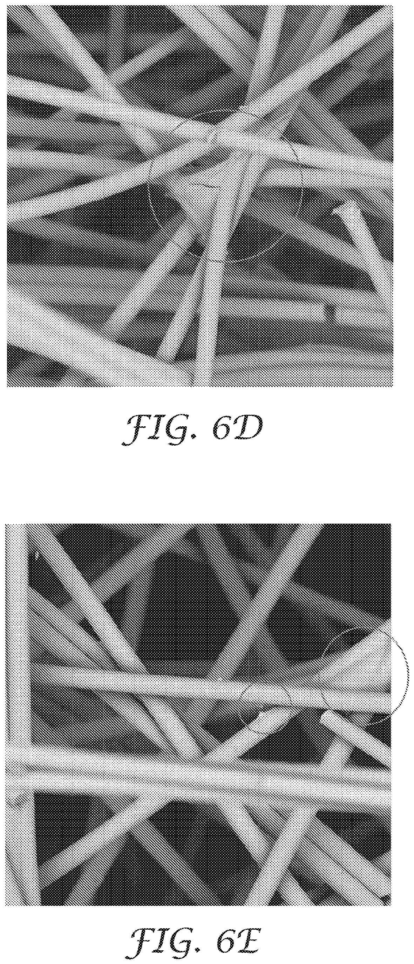

Presence of silica bonds between fibers was observed on sintered fiber webs via Scanning Electron Microscopy (circled area in red in Fig. 5) and EDS analysis (Fig. 6), providing cohesiveness to the web.

### Example 13:

Chopped/opened precursor ceramic fibers produced using Fiber spinning method 1 (76% alumina, 24% Silica, 15% PVA) and coated with 3M Silicone lubricant were blended with 5% Trevira 255 - 1.6 dtex, 6 mm (Trevira GmbH, Hattersheim, Germany) bicomponent melty fiber (29.9 g) and formed onto a 10mm thick rubber mold with 35mmx35mm squares cut out pattern. The patterned three-dimensional precursor material was held together by running into an oven (275F, 1 m/min) as described in the Three-dimensional mat making method 2 and partially melting the melty fiber. 3M Silicone lubricant was applied to both the top and bottom of the three-dimensional precursor material before firing. Final fired material was very soft and fluffy.

### Example 14:

Chopped/opened precursor ceramic fibers produced using Fiber spinning method 1 (76% alumina, 24% Silica, 15% PVA) and coated with 3M Silicone lubricant were blended with 5% Trevira 255 (1.6 dtex, 6 mm) bicomponent melty fiber (29.8 g) and 5% Glass microstrands 110-481 from Johns Manville, CO, USA (29.8 g) and formed onto a 10mm thick rubber mold with 35mmx35mm squares cut out pattern. The patterned 3D precursor material was held together by running into an oven as described in the Three-dimensional mat making method 2 (290F, 0.5 m/min. 3M Silicone lubricant was applied to both the top and bottom of the material before firing. Final fired material maintained its three dimensional pattern and shape (Figure 7).

### Example 15:

Chopped/opened precursor ceramic fibers produced using Fiber spinning method 1 (76% alumina, 24% Silica, 15% PVA) and coated with 3M Silicone lubricant were blended with 10% Trevira 255 (1.6 dtex, 6 mm) bicomponent melty fiber (59.7 g) and 5% Glass microstrands 110-481 from Johns Manville (29.8 g) and formed onto a thick rubber mold with 35mmx35mm squares cut out pattern. The patterned 3D precursor material was held together by running into an oven as described in the Three-dimensional mat making method 2 at 290F and 0.5 m/min. 3M Silicone lubricant was applied to both the top and bottom of the material before firing. Final fired material maintained its three dimensional pattern and shape.

### Example 16:

Chopped/opened precursor ceramic fibers produced using Fiber spinning method 1 (76% alumina, 24% Silica, 15% PVA) and coated with 3M Silicone lubricant were blended with 10% Trevira 255 1.6 dtex, 6 mm long melty bicomponent fiber (59.7 g) and 5% Glass microstrands 110-481 from Johns Manville (29.8 g) and formed onto a thin rubber mold with 35mmx35mm squares cut out pattern. The patterned 3D precursor material was held together by running into an oven as described in the Three-dimensional mat making method 2 at 290F and 0.5 m/min. 3M Silicone lubricant was applied to both the top and bottom of the material before firing. Final fired material was thinner than Examples 14 and 15 and maintained its three dimensional pattern and shape.

For each of the Comparative Examples and Examples, the Mullite Content determined according to the Mullite Content Measurement Procedure; the Filament Diameter Statistics (i.e., average diameter, $C_{pk}$ and $P_{pk}$ of fibers having diameters greater than 3 $\mu$m, the fraction (PPM) of fibers having diameters less than 3 $\mu$m, and the Minimum Diameter) determined according to the Filament Diameter Measurement Procedure, and the remaining resistance pressure (Open C1k) determined according to the Fatigue Test, are reported in Table 2 below.

**Table 2:**

| Example | Alumina/Silica | Fiber diameter measurements | | | | | | Open C1k |
|---|---|---|---|---|---|---|---|---|
| | | Fiber coun | Avg Dia | Cpk > 3um | Ppk > 3um | PPM < 3um | Min.dia | |
| | | | um | | | | um | kPa |
| Comparative Example 1 | 72/28 | 425 | 5.68 | 0.76 | 0.55 | 49,170 | 0.90 | 40 |
| Comparative Example 2 | 72/28 | 425 | 5.68 | 0.76 | 0.55 | 49,170 | 0.90 | 33 |
| Comparative Example 3 | 96/4 | 91 | 6.25 | 1.07 | 1.06 | 748 | 3.20 | 43 |
| Example 1 | 72/28 | | | | | | | 57 |
| Example 2 | 72/28 | 422 | 8.63 | 2.06 | 1.86 | 0.01 | 6.10 | 48 |
| Example 3 | 72/28 | | | | | | | 49 |
| Example 4 | 72/28 | 250 | 9.05 | 2.46 | 2.04 | 0.00 | 6.80 | 42 |
| Example 5 | 72/28 | | | | | | | 48 |
| Example 6 | 72/28 | 494 | 11.07 | 1.69 | 1.55 | 1.58 | 4.90 | 42 |
| Example 7 | 76/24 | 184 | 8.12 | 1.82 | 1.86 | 0.01 | 6.01 | 39 |
| Example 8 | 76/24 | 145 | 12.8 | 2.4 | 2.23 | 0.00 | 4.90 | 39 |
| Example 9 | 76/24 | 81 | 8.35 | 1.99 | 2.11 | 0.00 | 6.50 | 45 |
| Example 10 | 76/24 | | | | | | | 42 |
| Example 11 | 76/24 | | | | | | | 62 |

**Table 3:** Two- dimensional and Three-dimensional self-supported mats

| | Fiber length | Organic binder | Precursor inorganic binder | Other inorganic binder | Cohesive/self-supporting green fiber patterned mat | Cohesive/self-supporting fired ceramic fiber patterned mat |
|---|---|---|---|---|---|---|
| Comparative example 4 | Short | no | no | no | no | no |
| Comparative example 5 | Short | yes | no | no | yes | no |
| Comparative example 6 | Long | no | no | no | no | no |

(continued)

|  | Fiber length | Organic binder | Precursor inorganic binder | Other inorganic binder | Cohesive/self-supporting green fiber patterned mat | Cohesive/self-supporting fired ceramic fiber patterned mat |
|---|---|---|---|---|---|---|
| Example 12 | Long | no | yes | no | no | Cohesive 2D web, but no 3D structure |
| Example 13 | Short | yes | yes | no | yes | soft |
| Example 14 | Short | yes | yes | yes | yes | yes |
| Example 15 | Short | yes | yes | yes | yes | yes |
| Example 16 | Short | yes | yes | yes | yes | yes |

Reference throughout this specification to "one embodiment," "certain embodiments," "one or more embodiments" or "an embodiment," whether or not including the term "exemplary" preceding the term "embodiment," means that a particular feature, structure, material, or characteristic described in connection with the embodiment is included in at least one embodiment of the certain exemplary embodiments of the present disclosure. Thus, the appearances of the phrases such as "in one or more embodiments," "in certain embodiments," "in one embodiment" or "in an embodiment" in various places throughout this specification are not necessarily referring to the same embodiment of the certain exemplary embodiments of the present disclosure. Furthermore, the particular features, structures, materials, or characteristics may be combined in any suitable manner in one or more embodiments.

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove.

## Claims

**1.** An electric vehicle battery module comprising a nonwoven article comprising

a predominantly two-dimensional nonwoven structure or a three-dimensional nonwoven structure comprising a plurality of discontinuous polycrystalline, aluminosilicate ceramic fibers that are cohesively bonded together by a fired precursor inorganic binder, wherein each cohesively bonded discontinuous fiber is bonded to one or a plurality of other said discontinuous fibers at one or more locations along its length,
wherein the precursor inorganic binder is a siloxane,
wherein the predominantly two-dimensional nonwoven structure is a mat, sheet, or blanket and has a major surface dimension that is at least 10 times larger than its thickness dimension.

**2.** The electric vehicle battery module as claimed in claim 1, wherein said predominantly two-dimensional nonwoven structure has a longest major surface dimension and a shortest major surface dimension, and said cohesively bonded discontinuous fibers have a length that is less than the longest or shortest major surface dimension of the predominantly two-dimensional nonwoven structure.

**3.** The electric vehicle battery module as claimed in claim 1 or 2, wherein said predominantly two-dimensional nonwoven structure has a longest major surface dimension and a shortest major surface dimension, and said cohesively bonded discontinuous fibers have a length that is greater than the thickness dimension of the predominantly two-dimensional nonwoven structure and less than the longest or shortest major surface dimension of the predominantly two-dimensional nonwoven structure.

**4.** The electric vehicle battery module as claimed in any one of claims 1 to 3, wherein said three-dimensional nonwoven structure comprises at least one or a plurality of three-dimensional molded features, with each three-dimensional molded feature having a shortest major surface dimension, and each said three-dimensional molded feature is formed with said cohesively bonded discontinuous fibers having a length that is less than or equal to the shortest major surface dimension of said three-dimensional molded feature.

5. The electric vehicle battery module as claimed in any one of claims 1 to 4, wherein said cohesively bonded discontinuous fibers have a length that is greater than the thickness dimension of the three-dimensional nonwoven structure.

6. The electric vehicle battery module as claimed in any one of claims 1 to 5, wherein each of the plurality of polycrystalline, aluminosilicate ceramic fibers exhibits a diameter of at least 3 micrometers as determined using the Filament Diameter Measurement Procedure with electron microscopy.

7. The electric vehicle battery module as claimed in any one of claims 1 to 3, wherein the article is a predominantly two-dimensional nonwoven structure, and each of the plurality of polycrystalline, aluminosilicate ceramic fibers has a length equal to the longest or shortest major surface dimension of the predominantly the two-dimensional nonwoven structure or a length in between those dimensions.

8. The electric vehicle battery module as claimed in any one of claims 1 to 7, having a bulk density of from 0.05 to 0.3 $g/cm^3$, wherein the bulk density is the mass per unit volume of the bulk ceramic material that makes up the web, as measured according to the method of the description.

9. The electric vehicle battery module as claimed in any one of claims 1 to 8, having a thickness of at least 0.5 mm, measured on a 10 cm $\times$ 10 cm web or mat sample using a thickness testing gauge having a tester foot with dimensions of 5 cm $\times$ 12.5 cm at an applied pressure of 150 Pa.

10. The electric vehicle battery module as claimed in any one of claims 1 to 9, having a basis weight of at least 15 gsm.

11. The electric vehicle battery module as claimed in any one of claims 1 to 10, further comprising an inorganic binder to bond together the plurality of polycrystalline, aluminosilicate ceramic fibers, wherein the inorganic binder comprises silica, alumina, zirconia, kaolin clay, bentonite clay, silicate, micaceous particles, precursors thereof, and any combinations thereof.

12. A method of making a nonwoven article for the electric vehicle battery module as claimed in any one of claims 1 to 11, said method comprising:

flowing an aqueous ceramic precursor sol through a plurality of orifices to produce a plurality of substantially continuous or continuous filaments, wherein the aqueous ceramic precursor sol comprises at least one of alumina particles or silica particles dispersed in water, and further wherein the aqueous ceramic precursor sol further comprises at least one of a hydrolysable aluminum-containing compound or a hydrolyazable silicon-containing compound;
removing at least a portion of the water from the plurality of substantially continuous or continuous filaments to at least partially dry the plurality of substantially continuous or continuous filaments;
passing the at least partially dried filaments through an attenuator to draw the filaments to a desired diameter; and
collecting the at least partially dried filaments as a nonwoven web on a collector surface.

13. The method as claimed in claim 12, further comprising directing a stream of gas proximate the plurality of substantially continuous or continuous filaments to at least partially dry the plurality of substantially continuous or continuous filaments, optionally wherein the stream of gas is heated.

14. The method as claimed in claim 12 or 13, wherein the aqueous ceramic precursor sol comprises aluminum chlorohydrate and silica.

**Patentansprüche**

1. Ein elektrisches Fahrzeugbatteriemodul, aufweisend einen Vliesgegenstand, aufweisend

eine überwiegend zweidimensionale Vliesstruktur oder eine dreidimensionale Vliesstruktur, aufweisend eine Mehrzahl von unterbrochenen polykristallinen Aluminosilikat-Keramikfasern, die durch ein gefeuertes anorganisches Vorläuferbindemittel kohäsiv miteinander gebunden sind, wobei jede kohäsiv gebundene unterbrochene Faser an eine oder eine Mehrzahl von anderen der unterbrochenen Fasern an eine oder mehrere Stellen ihrer Länge entlang gebunden ist,
wobei das anorganische Vorläuferbindemittel ein Siloxan ist,

wobei die überwiegend zweidimensionale Vliesstruktur eine Matte, eine Lage oder eine Decke ist und eine Hauptoberflächenabmessung, die wenigstens 10 mal größer als ihre Dickenabmessung ist, einschließt.

2. Das elektrische Fahrzeugbatteriemodul nach Anspruch 1, wobei die überwiegend zweidimensionale Vliesstruktur eine längste Hauptoberflächenabmessung und eine kürzeste Hauptoberflächenabmessung einschließt und wobei die kohäsiv gebundenen unterbrochenen Fasern eine Länge einschließen, die kleiner als die längste oder kürzeste Hauptoberflächenabmessung der überwiegend zweidimensionalen Vliesstruktur ist.

3. Das elektrische Fahrzeugbatteriemodul nach Anspruch 1 oder 2, wobei die überwiegend zweidimensionale Vliesstruktur eine längste Hauptoberflächenabmessung und eine kürzeste Hauptoberflächenabmessung einschließt und wobei die kohäsiv gebundenen unterbrochenen Fasern eine Länge einschließen, die größer als die Dickenabmessung der überwiegend zweidimensionalen Vliesstruktur und kleiner als die längste oder kürzeste Hauptoberflächenabmessung der überwiegend zweidimensionalen Vliesstruktur ist.

4. Das elektrische Fahrzeugbatteriemodul nach einem der Ansprüche 1 bis 3, wobei die dreidimensionale Vliesstruktur wenigstens ein oder eine Mehrzahl von dreidimensionalen gegossenen Merkmalen aufweist, wobei jedes dreidimensionale gegossene Merkmal eine kürzeste Hauptoberflächenabmessung aufweist und jedes der dreidimensionalen gegossenen Merkmale mit den kohäsiv gebundenen unterbrochenen Fasern, die eine Länge einschließen, die kleiner als oder gleich der kürzesten Hauptoberflächenabmessung des dreidimensionalen gegossenen Merkmals ist, ausgebildet ist.

5. Das elektrische Fahrzeugbatteriemodul nach einem der Ansprüche 1 bis 4, wobei die kohäsiv gebundenen unterbrochenen Fasern eine Länge einschließen, die größer als die Dickenabmessung der dreidimensionalen Vliesstruktur ist.

6. Das elektrische Fahrzeugbatteriemodul nach einem der Ansprüche 1 bis 5, wobei jede der Mehrzahl von polykristallinen Alumosilikat-Keramikfasern einen Durchmesser von wenigstens 3 Mikrometer, wie bestimmt unter Verwendung des Fadendurchm esserm essungsverfahrens mit Elektronenmikroskopie, vorweist.

7. Das elektrische Fahrzeugbatteriemodul nach einem der Ansprüche 1 bis 3, wobei

der Gegenstand eine überwiegend zweidimensionale Vliesstruktur ist und jede der Mehrzahl von polykristallinen Alumosilikat-Keramikfasern eine Länge aufweist, die gleich der längsten oder kürzesten Hauptoberflächenabmessung der überwiegend zweidimensionalen Vliesstruktur oder einer Länge zwischen diesen Abmessungen ist.

8. Das elektrische Fahrzeugbatteriemodul nach einem der Ansprüche 1 bis 7, das eine Rohdichte von 0,05 bis 0,3 g/cm3 einschließt, wobei die Rohdichte die Masse pro Volumeneinheit des Rohkeramikmaterials ist, das das Gewebe, wie nach dem Verfahren der Beschreibung gemessen, ausmacht.

9. Das elektrische Fahrzeugbatteriemodul nach einem der Ansprüche 1 bis 8, das eine Dicke von wenigstens 0,5 mm aufweist, die an einer 10 cm × 10 cm Gewebe- oder einer Mattenprobe unter Verwendung eines Dickenprüfungsmessgeräts, das einen Prüffuß mit Abmessungen von 5 cm × 12,5 cm bei einem angelegten Druck von 150 Pa, einschließt, gemessen wird.

10. Das elektrische Fahrzeugbatteriemodul nach einem der Ansprüche 1 bis 9, das ein Basisgewicht von wenigstens 15 g/m2 einschließt.

11. Das elektrisches Fahrzeugbatteriemodul nach einem der Ansprüche 1 bis 10, ferner aufweisend ein anorganisches Bindemittel, um die Mehrzahl von polykristallinen Aluminosilikatmikrofasern zu binden, wobei das anorganische Bindemittel Siliciumdioxid, Aluminiumoxid, Zirkonoxid, kaolinhaltigen Ton, Bentonit-Ton, Silikat, glimmerartige Teilchen, Vorläufer davon und beliebige Kombinationen davon aufweist.

12. Ein Verfahren zum Herstellen eines Vliesgegenstands für das elektrische Fahrzeugzbatteriemodul nach einem der Ansprüche 1 bis 11, das Verfahren aufweisend:

Fließen eines wässrigen Keram ikvorläufersols durch eine Mehrzahl von Öffnungen, um eine Mehrzahl von im Wesentlichen ununterbrochenen oder ununterbrochenen Filamenten zu erzeugen, wobei das wässrige Keramikvorläufersol wenigstens eines der Aluminiumoxidteilchen oder Siliciumdioxidteilchen, die in Wasser zerstreut sind, aufweist und ferner wobei das wässrige Keramikvorläufersol ferner wenigstens eine einer hydrolysierbaren aluminium haltigen Verbindung oder einer hydrolysierbaren silizium haltigen Verbindung aufweist;

Entfernen wenigstens eines Abschnitts des Wassers aus der Mehrzahl von im Wesentlichen ununterbrochenen oder ununterbrochenen Filamenten, um die Mehrzahl der im Wesentlichen ununterbrochenen oder ununterbrochenen Filamente wenigstens teilweise zu trocknen;

Weiterleiten der wenigstens teilweise getrockneten Filamente durch einen Dämpfer, um die Filamente auf einen gewünschten Durchmesser zu ziehen; und

Sammeln der wenigstens teilweise getrockneten Filamente als eine Vliesgewebe auf einer Sammeloberfläche.

13. Das Verfahren nach Anspruch 12, ferner aufweisend ein Leiten eines Gasstroms in der Nähe der Mehrzahl von im Wesentlichen ununterbrochenen oder ununterbrochenen Filamenten, um die Mehrzahl von im Wesentlichen ununterbrochenen oder ununterbrochenen Filamenten wenigstens teilweise zu trocknen, optional wobei der Gasstrom erwärmt wird.

14. Das Verfahren nach einem der Ansprüche 12 oder 13, wobei das wässrige Keramikvorläufersol Aluminiumchlorhydrat und Siliciumdioxid aufweist.

## Revendications

1. Module de batterie de véhicule électrique comprenant un article non tissé comprenant

une structure non tissée principalement bidimensionnelle ou une structure non tissée tridimensionnelle comprenant une pluralité de fibres céramiques aluminosilicate discontinues, qui sont liées en cohésion ensemble par un liant inorganique précurseur cuit, dans lequel chaque fibre discontinue liée cohésive est liée à une ou une pluralité d'autres fibres discontinues à un ou plusieurs emplacements sur sa longueur,
dans lequel le liant inorganique précurseur est un siloxane,
dans lequel la structure non tissée principalement bidimensionnelle est un mat, une feuille ou une couverture et a une dimension de surface principale qui est au moins 10 fois plus grande que sa dimension d'épaisseur.

2. Module de batterie de véhicule électrique selon la revendication 1, dans lequel ladite structure non tissée principalement bidimensionnelle a une dimension de surface principale la plus longue et une dimension de surface principale la plus courte, et lesdites fibres discontinues cohésives ont une longueur qui est inférieure à la dimension de surface principale la plus longue ou la plus courte de la structure non tissée majoritairement bidimensionnelle.

3. Module de batterie de véhicule électrique selon la revendication 1 ou 2, dans lequel ladite structure non tissée principalement bidimensionnelle a une dimension de surface principale la plus longue et une dimension de surface principale la plus courte, et lesdites fibres discontinues cohésives ont une longueur qui est supérieure à la dimension d'épaisseur de la structure non tissée majoritairement bidimensionnelle et inférieure à la dimension de surface principale la plus longue ou la plus courte de la structure non tissée principalement bidimensionnelle.

4. Module de batterie de véhicule électrique selon l'une quelconque des revendications 1 à 3, dans lequel ladite structure non tissée tridimensionnelle comprend au moins une ou une pluralité d'éléments moulés tridimensionnels, chaque caractéristique moulée tridimensionnelle ayant une dimension de surface principale la plus courte, et chaque dite caractéristique moulée tridimensionnelle étant formée avec lesdites fibres discontinues cohésives ayant une longueur qui est inférieure ou égale à la dimension de surface principale la plus courte de ladite caractéristique moulée tridimensionnelle.

5. Module de batterie de véhicule électrique selon l'une quelconque des revendications 1 à 4, dans lequel lesdites fibres discontinues cohésives liées ont une longueur qui est supérieure à la dimension d'épaisseur de la structure non tissée tridimensionnelle.

6. Module de batterie de véhicule électrique selon l'une quelconque des revendications 1 à 5, dans lequel chacune de la pluralité de fibres céramiques d'aluminosilicate polycristallines présente un diamètre d'au moins 3 micromètres tel que déterminé à l'aide de procédure de mesure de diamètre de filament avec microscopie électronique.

7. Module de batterie de véhicule électrique selon l'une quelconque des revendications 1 à 3, dans lequel

l'article est une structure

non tissée bidimensionnelle prédominante, et chacune de la pluralité de fibres céramiques aluminosilicate polycristallines a une longueur égale à la dimension de surface principale la plus longue ou la plus courte de la structure non tissée principalement bidimensionnelle ou une longueur entre ces dimensions.

8. Module de batterie de véhicule électrique selon l'une quelconque des revendications 1 à 7, ayant une masse volumique apparente allant de 0,05 à 0,3 g/cm3, dans lequel la masse volumique apparente est la masse par volume unitaire du matériau céramique en vrac qui constitue la bande, telle que mesurée selon le procédé de la description.

9. Module de batterie de véhicule électrique selon l'une quelconque des revendications 1 à 8, ayant une épaisseur d'au moins 0,5 mm, mesurée sur un échantillon de bande ou de mat de 10 cm × 10 cm à l'aide d'une jauge de test d'épaisseur ayant un pied testeur avec des dimensions de 5 cm × 12,5 cm à une pression appliquée de 150 Pa.

10. Module de batterie de véhicule électrique selon l'une quelconque des revendications 1 à 9, ayant une masse surfacique d'au moins 15 g/m2.

11. Module de batterie de véhicule électrique selon l'une quelconque des revendications 1 à 10, comprenant en outre un liant inorganique pour lier ensemble la pluralité de fibres céramiques d'aluminosilicate polycristallines, dans lequel le liant inorganique comprend de la silice, de l'alumine, de la zircone, de l'argile kaolin, de l'argile bentonite, du silicate, des particules miciques, des précurseurs de ceux-ci et toute combinaison de ceux-ci.

12. Procédé de fabrication d'un article non tissé pour le module de batterie de véhicule électrique selon l'une quelconque des revendications 1 à 11, ledit procédé comprenant :

l'écoulement d'un sol précurseur de céramique aqueux à travers une pluralité d'orifices pour produire une pluralité de filaments sensiblement continus ou continus, dans lequel le sol aqueux précurseur de céramique comprend au moins l'une parmi des particules d'alumine ou des particules de silice dispersées dans de l'eau, et dans lequel en outre le sol aqueux précurseur de céramique comprend en outre au moins l'un parmi un composé contenant de l'aluminium hydrolysable ou un composé contenant du silicium hydrolysable ;

l'élimination d'au moins une partie de l'eau de la pluralité de filaments sensiblement continus ou continus pour sécher au moins partiellement la pluralité de filaments sensiblement continus ou continus ;

le passage des filaments au moins partiellement séchés à travers un atténuateur pour aspirer les filaments à un diamètre souhaité ; et

la collecte des filaments au moins partiellement séchés en tant que bande non tissée sur une surface collectrice.

13. Procédé selon la revendication 12, comprenant en outre le fait de diriger un courant de gaz à proximité de la pluralité de filaments sensiblement continus ou continus pour sécher au moins partiellement la pluralité de filaments sensiblement continus ou continus, éventuellement dans lequel le courant de gaz est chauffé.

14. Procédé selon la revendication 12 ou 13, dans lequel le sol aqueux de précurseur de céramique comprend du chlorhydrate d'aluminium et de la silice.

FIG. 1

FIG. 2

FIG. 3

FIG. 4A

*FIG. 4B*

*FIG. 5*

*FIG. 6A*

*FIG. 6B*

*FIG. 6C*

*FIG. 6D*

*FIG. 6E*

FIG. 7

*FIG. 8A*

*FIG. 8B*

*FIG. 9*

FIG. 10

**EP 3 790 850 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018093624 A1
- WO 2012106295 A1
- EP 2754747 A1
- US 7261864 B
- US 9834875 B
- US 9771675 B
- US 3001571 A
- US 3916057 A, Hatch
- US 4305992 A
- US 4385135 A
- US 5254416 A, Langer
- US 5242871 A, Hashimoto
- US 5380580 A, Rogers
- US 7261864 B2, Watanabe
- US 5385873 A
- US 5207989 A, MacNeil
- WO 9748889 A, Sanocki
- US 6607624 B
- US 7182999 B, Hiroyuki Ohashi
- US 8124022 B, Howorth
- US 3760049 A, Borer
- US 4954462 A, Wood
- US 5917075 A, Wolter
- US 20020098142 A, Brasch
- US 4181514 A, Lefkowitz
- US 5736109 A
- US 7704459 B
- US 8007732 B

### Non-patent literature cited in the description

- **NIOSH.** Criteria for a Recommended Standard: Occupational Exposure to Refractory Ceramic Fibers. *National Institute for Occupational Safety and Health,* 2006, http://www.cdc.gov/niosh/docs/2006-123